# EUROPEAN PATENT APPLICATION

(11) **EP 4 761 057 A1**
(43) Date of publication of application: **17.06.2026**
(21) Application number: 24861763.1
(22) Date of filing: 08.08.2024
(51) Int. Cl.: H02J 13/00

(54) **ELECTRIC POWER MEASUREMENT AND CONTROL APPARATUS, AND POWER GENERATION SYSTEM**

(30) Priority: 04.09.2023 CN 202311138525
(71) Applicant: Huawei Digital Power Technologies Co., Ltd., Shenzhen, Guangdong 518043 (CN)
(72) Inventor: WANG, Shuchao, Shenzhen, Guangdong 518043 (CN); SHEN, Yanbai, Shenzhen, Guangdong 518043 (CN); HE, Yuanming, Shenzhen, Guangdong 518043 (CN); PAN, Ke, Shenzhen, Guangdong 518043 (CN); QU, Wenqiang, Shenzhen, Guangdong 518043 (CN); ZHU, Junwei, Shenzhen, Guangdong 518043 (CN)
(74) Representative: Isarpatent
(86) International application number: PCT/CN2024/110722
(87) International publication number: WO 2025/050919

(57) **Abstract**

This application provides an electric power measurement and control device and a power generation system. The electric power measurement and control device is used in the power generation system, the power generation system includes a plurality of power conversion devices and a switch device, the switch device is configured to control connection and disconnection between the power conversion devices and a power grid, output ends of the power conversion devices are connected to the power grid via a point of coupling, and the electric power measurement and control device includes a first chip and a second chip. An electric power measurement and control functional module of the first chip obtains electrical data of the point of coupling, and sends a first control signal to the power conversion devices and the switch device based on the electrical data of the point of coupling. A SCADA and EMS functional module of the second chip obtains electrical data of the plurality of power conversion devices and electrical data of the switch device, and generates a second control signal based on the electrical data of the plurality of power conversion devices, the electrical data of the switch device, and the electrical data of the point of coupling. The electric power measurement and control functional module sends a third control signal to the power conversion devices and the switch device based on the second control signal. According to this application, costs and complexity of the power generation system can be reduced.

## Description

This application claims priority to Chinese Patent Application No. 202311138525.7, filed with the China National Intellectual Property Administration on September 4, 2023 and entitled "ELECTRIC POWER MEASUREMENT AND CONTROL DEVICE AND POWER GENERATION SYSTEM", which is incorporated herein by reference in its entirety.

### TECHNICAL FIELD

This application relates to the field of power automation monitoring and control devices, and in particular, to an electric power measurement and control device and a power generation system.

### BACKGROUND

With the wide application of new energy technologies, a large quantity of large- and medium-sized power stations such as photovoltaic power stations and PV+ESS power stations, small-sized distributed power stations, industrial and commercial power stations, household power stations, and microgrids emerge. A rated power capacity of the large- and medium-sized power station is 20 MW or even more than 100 MW. A rated power capacity of the small-sized distributed power station is generally between 1 MW and 20 MW. Rated power capacities of the industrial and commercial power station and the household power station are within 1 MW.

To meet a power operation control requirement of the power station and operation monitoring and management, operations, and maintenance requirements of the microgrid, two types of control devices and systems are usually configured in the foregoing power station and the microgrid, that is, an electric power measurement and control device and a control system having a supervisory control and data acquisition (SCADA, Supervisory Control and Data Acquisition) function and an energy management system (EMS, Energy Management System) function. The electric power measurement and control device can meet a requirement of millisecond-level or lower-level acquisition control, and has high requirements for fastness, real-time performance, and reliability. The control system having the SCADA and EMS functions can meet requirements of second-level or minute-level acquisition and optimization control, and has low requirements for fastness, real-time performance, and reliability. Specifically, the control system having the SCADA and EMS functions mainly performs long-term data acquisition and storage management on the power station and the microgrid, and performs AI optimization computing with large computing power for a long time, to perform parameter optimization, calibration, or control on the power station and the microgrid, thereby improving service lives or electricity generation capacities of the power station and the microgrid. Electric power measurement and control devices and control systems having SCADA and EMS functions are simultaneously configured in the power station and the microgrid, to meet different requirements of the power station and the microgrid for fastness, real-time performance, and reliability.

The control system having the SCADA and EMS functions is usually built in a monitoring room or centralized control room, is deployed in an independent server, and is combined with a large- and medium-sized database system, a monitoring liquid crystal display, a workbench, and the like. The control system having the SCADA and EMS functions is generally a computer server with a large size, high power consumption, and heat dissipation via a fan. For a small quantity of large-sized power stations or micro-grids, costs and complexity of simultaneously configuring two types of control devices and computer server monitoring systems are acceptable. However, for a large quantity of small- and medium-sized power stations or micro-grids, costs of simultaneously configuring two types of control devices and computer server monitoring systems are excessively high, and engineering implementation and information exchange are complex, which is not conducive to industry development. In addition, for a simple site, a device including a single-board structure is further used to reduce power supply and deployment costs, and meet requirements for distributed application, high-reliability redundant two-node cluster, simple human-machine interaction HMI display, and flexible application deployment in a special scenario.

To sum up, it is particularly important to reduce total costs and deployment complexity of power stations including photovoltaic generators, PV+ESS generators, and diesel generators, and microgrids, while meeting requirements for acquisition, communication, and display in different scenarios, high reliability, and flexible application deployment.

### SUMMARY

This application provides an electric power measurement and control device and a power generation system, to reduce costs and complexity of the power generation system.

According to a first aspect, this application provides an electric power measurement and control device. The electric power measurement and control device is used in a power generation system, the power generation system includes a plurality of power conversion devices and a switch device, the switch device is configured to control connection and disconnection between the plurality of power conversion devices and a power grid, output ends of the plurality of power conversion devices are configured to connect to the power grid via a point of coupling, and the electric power measurement and control device includes a first chip and a second chip. The first chip includes an electric power measurement and control functional module, and the electric power measurement and control functional module is configured to: obtain an electrical status of the point of coupling, and send a first control signal to the plurality of power conversion devices and the switch device based on the electrical status of the point of coupling. The first chip is further configured to send the electrical data of the point of coupling to the second chip through a communication interface. The second chip includes a SCADA and EMS functional module, and the SCADA and EMS functional module is configured to: obtain electrical data of the plurality of power conversion devices and electrical data of the switch device, and generate a second control signal based on the electrical data of the plurality of power conversion devices, the electrical data of the switch device, and the electrical data of the point of coupling. The second chip is further configured to send the second control signal to the first chip through the communication interface, or the second chip is further configured to send the electrical data of the plurality of power conversion devices and the electrical data of the switch device to the first chip through the communication interface. The electric power measurement and control functional module is further configured to send a third control signal to the plurality of power conversion devices and the switch device based on the received electrical data of the plurality of power conversion devices and the received electrical data of the switch device that are sent by the second chip through the communication interface, or the received second control signal that is sent by the second chip through the communication interface.

In this implementation, the electric power measurement and control device separately integrates SCADA and EMS functions and an electric power measurement and control function on the two internal chips. In comparison with a dual control system in a power generation system in the conventional technology that has a large size, high system costs, and high complexity, a device size can be greatly reduced, and a large quantity of power supply circuits and auxiliary circuits can be saved. Therefore, the electric power measurement and control device can effectively reduce costs and complexity of the power generation system.

With reference to the first aspect, in a first possible implementation, data transmission between the first chip and the second chip includes real-time communication and non-real-time communication, and a data transmission frequency of the real-time communication is greater than a data transmission frequency of the non-real-time communication.

In this implementation, communication between the two chips is classified into real-time communication and non-real-time communication. This helps meet different transmission requirements for two types of data: real-time communication data and non-real-time communication data.

With reference to the first aspect or the first possible implementation of the first aspect, in a second possible implementation, the electric power measurement and control device includes at least one control board; and the first chip and the second chip are installed on a same control board, or the first chip and the second chip are installed on different control boards.

In this implementation, the first chip and the second chip are respectively placed on two independent peripheral circuit boards of the electric power measurement and control device, to implement independent arrangement or combination of respective functions on the two boards. This helps improve project implementation flexibility and reduce costs. In addition, the first chip and the second chip are placed on a same independent peripheral circuit board, so that the first chip and the second chip may share some chips, interfaces, and circuits. This effectively reduces costs of the electric power measurement and control device and reduces a volume of the electric power measurement and control device.

With reference to the second possible implementation of the first aspect, in a third possible implementation, a power supply interface is disposed on the control board, and the power supply interface is configured to connect to a power supply.

In this implementation, the independent external power supply interface is disposed on the control board, so that the single control board can be independently powered without a bus backplane board. This can effectively reduce the costs of the electric power measurement and control device and reduce a size of the electric power measurement and control device.

With reference to the second possible implementation of the first aspect or the third possible implementation of the first aspect, in a fourth possible implementation, a power supply board interface is disposed on the control board, and the power supply board interface is configured to supply power to the control board through a power supply board when the power supply board interface is connected to the power supply board.

In this implementation, in addition to being powered by an external power supply located outside the electric power measurement and control device, a board in the electric power measurement and control device may further be powered by a power supply board inside the electric power measurement and control device. A power supply manner of the board is diversified and flexible.

With reference to any one of the second possible implementation of the first aspect to the fourth possible implementation of the first aspect, in a fifth possible implementation, the communication interface is disposed on the control board, the control board is configured to perform data transmission with a first device through the communication interface, and the first device is a device in the power generation system other than the electric power measurement and control device.

In this implementation, the electric power measurement and control device implements communication between control boards by setting communication interfaces on the control boards. The communication between the control boards is mainly based on a communication network (for example, Ethernet) instead of a conventional inter-board interaction technology like a bus or a shared memory. Therefore, it is beneficial for distributed deployment of the boards, and is not limited by a physical distance layout.

With reference to any one of the second possible implementation of the first aspect to the fifth possible implementation of the first aspect, in a sixth possible implementation, a human-machine display interface is further disposed on the control board, and the second chip is configured to display the electrical data of the plurality of power conversion devices, the electrical data of the switch device, and the electrical data of the point of coupling on a display device through the human-machine display interface.

In this implementation, the human-machine display interface (for example, an HDMI interface) is disposed on the control board of the electric power measurement and control device, so that the electric power measurement and control device can directly perform display on an external display (for example, a notebook display) through the human-machine display interface, and no dedicated display needs to be disposed in the power generation system. This helps reduce the costs of the power generation system.

With reference to any one of the first aspect to the sixth possible implementation of the first aspect, in a seventh possible implementation, a communication network between the first chip and the second chip is the same as a communication network between the electric power measurement and control device and a device in the power generation system other than the electric power measurement and control device.

In this implementation, when master-slave distributed expansion needs to be performed on the power generation system, because the communication network between the internal chips in the electric power measurement and control device is the same as a communication network between the electric power measurement and control device and an external device, a problem that large software and hardware development workloads are caused during distributed expansion due to differences between internal and external physical communication links and protocols can be avoided, thereby facilitating master-slave distributed expansion of the power generation system, and effectively improving distributed expansion efficiency.

With reference to the fifth possible implementation of the first aspect, in an eighth possible implementation, the communication interface includes an Ethernet interface.

With reference to any one of the first aspect to the eighth possible implementation of the first aspect, in a ninth possible implementation, the second control signal includes a control signal generated by the SCADA and EMS functional module for performing logic control or artificial intelligence (Artificial Intelligence, AI) control on the plurality of power conversion devices and the switch device. The logic control includes preset startup policy control, preset shutdown policy control, preset active power decomposition delivery policy control, preset reactive power decomposition delivery policy control, and preset frequency and voltage stabilization policy control for the power conversion device, point of coupling switch on/off control, or power adjustment control for a single power conversion device. The AI control includes rated power capacity prediction control, energy yield prediction control, or device service life prediction control for the power conversion device.

With reference to any one of the first aspect to the ninth possible implementation of the first aspect, in a tenth possible implementation, the power conversion device is a photovoltaic inverter. The SCADA and EMS functional module is configured to: obtain the electrical data of the plurality of photovoltaic inverters, the electrical data of the switch device, and electrical data of the power generation system, and generate the second control signal based on the electrical data of the plurality of photovoltaic inverters, the electrical data of the switch device, the electrical data of the point of coupling, and the electrical data of the power generation system. In this implementation, the electric power measurement and control device is applicable to a photovoltaic power generation system.

With reference to the tenth possible implementation of the first aspect, in an eleventh possible implementation, the real-time communication data includes the electrical data of the point of coupling, and the non-real-time communication data includes the electrical data of the power generation system and the electrical data of the photovoltaic inverters.

With reference to the tenth possible implementation of the first aspect or the eleventh possible implementation of the first aspect, in a twelfth possible implementation, the electrical data of the point of coupling includes a current, a voltage, or a power of the point of coupling. The electrical data of the power generation system includes a system capacity or a primary rated value and a secondary rated value of a point of coupling measurement transformer. Electrical data of the photovoltaic inverter includes a rated voltage, a rated current, a rated power, or a configuration file of the photovoltaic inverter.

With reference to any one of the first aspect to the ninth possible implementation of the first aspect, in a thirteenth possible implementation, the power conversion device is a power conversion system, the power generation system further includes an energy storage battery, and the energy storage battery is connected to an input end of the power conversion system. The SCADA and EMS functional module is configured to: obtain the electrical data of the plurality of power conversion systems, the electrical data of the switch device, and electrical data of the energy storage battery, and generate the second control signal based on the electrical data of the plurality of power conversion systems, the electrical data of the switch device, the electrical data of the point of coupling, and the electrical data of the energy storage battery. In this implementation, the electric power measurement and control device is applicable to an energy storage power generation system.

With reference to the thirteenth possible implementation of the first aspect, in a fourteenth possible implementation, the electrical status of the energy storage battery includes a current, a voltage, a charge/discharge power, a charge/discharge state, a battery temperature, a remaining battery capacity, a battery state of health, an accumulated battery charge capacity, or an accumulated battery discharge capacity of the energy storage battery. The electrical data of the point of coupling includes a current, a voltage, or a power of the point of coupling. Electrical data of the power conversion system includes a rated voltage, a rated current, a rated power, or a configuration file of the power conversion system. The real-time communication data includes the charge/discharge power or the charge/discharge state of the energy storage battery, and the current, the voltage, or the power of the point of coupling. The non-real-time communication data includes the current, the voltage, the battery temperature, the remaining battery capacity, the battery state of health, the accumulated battery charge capacity, or the accumulated battery discharge capacity of the energy storage battery.

With reference to any one of the first aspect to the ninth possible implementation of the first aspect, in a fifteenth possible implementation, the power conversion device is a generator set, and the output ends of the plurality of generator sets are further configured to connect to a load device. The SCADA and EMS functional module is configured to: obtain the electrical data of the plurality of generator sets, the electrical data of the switch device, and electrical data of the load device, and generate the second control signal based on the electrical data of the plurality of generator sets, the electrical data of the switch device, the electrical data of the point of coupling, and the electrical data of the load device. In this implementation, the electric power measurement and control device is applicable to a power generation system in which generator sets such as a wind power generation system, a diesel power generation system, a hydropower power generation system, and a thermal power generation system are located.

With reference to the fifteenth possible implementation of the first aspect, in a sixteenth possible implementation, an electrical status of the generator set includes an output current, an output voltage, a rated power capacity, a power generation status, an available power, or a maximum power of the generator set. The electrical status of the load device includes a device status, a current power, a maximum power, or a minimum power of the load device. The electrical data of the point of coupling includes a current, a voltage, or a power of the point of coupling. The electrical data of the generator set includes a rated voltage, a rated current, a rated power, or a configuration file of the generator set. The real-time communication data includes the rated power capacity or the power generation status of the generator set, the device status or the current power of the load device, and the current, the voltage, or the power of the point of coupling. The non-real-time communication data includes the output current, the output voltage, the available power, the maximum power, and a total energy yield of the generator set, the maximum power, the minimum power, or total energy consumption of the load device, and the rated voltage, the rated current, the rated power, or the configuration file of the generator set.

According to a second aspect, this application provides an electric power measurement and control device. The electric power measurement and control device is used in a power generation system, the power generation system includes a plurality of power conversion devices and a switch device, the switch device is configured to control connection and disconnection between the plurality of power conversion devices and a power grid, and output ends of the plurality of power conversion devices are configured to connect to the power grid via a point of coupling. The electric power measurement and control device includes a first chip, the first chip includes a plurality of cores and a bus, and the plurality of cores include a SCADA functional module, an EMS functional module, and an electric power measurement and control functional module. Data is transmitted between the plurality of cores through the bus. The electric power measurement and control functional module is configured to: obtain electrical data of the point of coupling, and send a first control signal to the plurality of power conversion devices and the switch device based on the electrical data of the point of coupling. The electric power measurement and control functional module is further configured to send the electrical data of the point of coupling to the SCADA functional module through the bus. The SCADA functional module is configured to obtain electrical data of the plurality of power conversion devices and electrical data of the switch device. The EMS functional module is configured to generate a second control signal based on the electrical data of the plurality of power conversion devices, the electrical data of the switch device, and the electrical data of the point of coupling that are obtained by the SCADA functional module. The EMS functional module is further configured to send the second control signal to the electric power measurement and control functional module through the bus, or the EMS functional module is further configured to send the electrical data of the plurality of power conversion devices and the electrical data of the switch device to the electric power measurement and control functional module through the bus. The electric power measurement and control functional module is further configured to send a third control signal to the plurality of power conversion devices and the switch device based on the received electrical data of the plurality of power conversion devices and the received electrical data of the switch device that are sent by the EMS functional module through the bus, or the received second control signal that is sent by the EMS functional module through the bus.

In this implementation, the electric power measurement and control device separately integrates SCADA and EMS functions and an electric power measurement and control function on different cores of the same chip. In comparison with a dual control system in a power generation system in the conventional technology that has a large size, high system costs, and high complexity, a device size can be greatly reduced, and a large quantity of power supply circuits and auxiliary circuits can be saved. Therefore, the electric power measurement and control device can effectively reduce costs and complexity of the power generation system.

With reference to the second aspect, in a first possible implementation, data transmission between the plurality of cores includes real-time communication and non-real-time communication, and a data transmission frequency of the real-time communication is greater than a data transmission frequency of the non-real-time communication.

In this implementation, communication between the plurality of cores is classified into real-time communication and non-real-time communication. This helps meet different transmission requirements for two types of data: real-time communication data and non-real-time communication data.

With reference to the second aspect or the first possible implementation of the second aspect, in a second possible implementation, the electric power measurement and control device includes at least one control board, the at least one control board includes a first control board, and the first chip is installed on the first control board.

In this implementation, the first chip is placed on an independent peripheral circuit board of the electric power measurement and control device, to implement independent arrangement or combination of a function on the board. This helps improve project implementation flexibility and reduce costs.

With reference to the second possible implementation of the second aspect, in a third possible implementation, a power supply interface is disposed on the first control board, and the power supply interface is configured to connect to a power supply.

In this implementation, the independent external power supply interface is disposed on the control board, so that the single control board can be independently powered without a bus backplane board. This can effectively reduce the costs of the electric power measurement and control device and reduce a size of the electric power measurement and control device.

With reference to the second possible implementation of the second aspect or the third possible implementation of the second aspect, in a fourth possible implementation, the electric power measurement and control device further includes a power supply board, a power supply board interface is disposed on the first control board, and the power supply board interface is configured to supply power to the first control board through the power supply board when the power supply board interface is connected to the power supply board.

In this implementation, in addition to being powered by an external power supply located outside the electric power measurement and control device, a board in the electric power measurement and control device may further be powered by a power supply board inside the electric power measurement and control device. A power supply manner of the board is diversified and flexible.

With reference to any one of the second possible implementation of the second aspect to the fourth possible implementation of the second aspect, in a fifth possible implementation, a communication interface is disposed on the control board, the control board is configured to perform data transmission with a first device through the communication interface, and the first device is a device in the power generation system other than the electric power measurement and control device.

In this implementation, the electric power measurement and control device implements communication between control boards by setting communication interfaces on the control boards. The communication between the control boards is mainly based on a communication network (for example, Ethernet) instead of a conventional inter-board interaction technology like a bus or a shared memory. Therefore, it is beneficial for distributed deployment of the boards, and is not limited by a physical distance layout.

With reference to the fifth possible implementation of the second aspect, in a sixth possible implementation, the communication interface includes an Ethernet interface.

With reference to any one of the second possible implementation of the second aspect to the sixth possible implementation of the second aspect, in a seventh possible implementation, a human-machine display interface is further disposed on the first control board, and the first chip is configured to display the electrical data of the plurality of power conversion devices, the electrical data of the switch device, and the electrical data of the point of coupling on a display device through the human-machine display interface.

In this implementation, the human-machine display interface (for example, an HDMI interface) is disposed on the control board of the electric power measurement and control device, so that the electric power measurement and control device can directly perform display on an external display (for example, a notebook display) through the human-machine display interface, and no dedicated display needs to be disposed in the power generation system. This helps reduce the costs of the power generation system.

With reference to any one of the second aspect to the seventh possible implementation of the second aspect, in an eighth possible implementation, the second control signal includes a control signal generated by the EMS functional module for performing logic control or artificial intelligence (Artificial Intelligence, AI) control on the plurality of power conversion devices and the switch device. The logic control includes preset startup policy control, preset shutdown policy control, preset active power decomposition delivery policy control, preset reactive power decomposition delivery policy control, and preset frequency and voltage stabilization policy control for the power conversion device, point of coupling switch on/off control, or power adjustment control for a single power conversion device. The AI control includes rated power capacity prediction control, energy yield prediction control, or device service life prediction control for the power conversion device.

With reference to any one of the second aspect to the eighth possible implementation of the second aspect, in a ninth possible implementation, the power conversion device is a photovoltaic inverter. The SCADA functional module is configured to obtain the electrical data of the plurality of photovoltaic inverters, the electrical data of the switch device, the electrical data of the point of coupling, and electrical data of the power generation system. The EMS functional module is configured to generate the second control signal based on the electrical data of the plurality of photovoltaic inverters, the electrical data of the switch device, the electrical data of the point of coupling, and the electrical data of the power generation system that are obtained by the SCADA functional module. In this implementation, the electric power measurement and control device is applicable to a photovoltaic power generation system.

With reference to the ninth possible implementation of the second aspect, in a tenth possible implementation, the real-time communication data includes the electrical data of the point of coupling, and the non-real-time communication data includes the electrical data of the power generation system and the electrical data of the photovoltaic inverters.

With reference to the ninth possible implementation of the second aspect or the tenth possible implementation of the second aspect, in an eleventh possible implementation, the electrical data of the point of coupling includes a current, a voltage, or a power of the point of coupling. The electrical data of the power generation system includes a system capacity or a primary rated value and a secondary rated value of a point of coupling measurement transformer. Electrical data of the photovoltaic inverter includes a rated voltage, a rated current, a rated power, or a configuration file of the photovoltaic inverter.

With reference to any one of the second aspect to the eighth possible implementation of the second aspect, in a twelfth possible implementation, the power conversion device is a power conversion system, the power generation system further includes an energy storage battery, and the energy storage battery is connected to an input end of the power conversion system. The SCADA functional module is configured to obtain the electrical data of the plurality of power conversion systems, the electrical data of the switch device, the electrical data of the point of coupling, and electrical data of the energy storage battery. The EMS functional module is configured to generate the second control signal based on the electrical data of the plurality of power conversion systems, the electrical data of the switch device, the electrical data of the point of coupling, and the electrical data of the energy storage battery that are obtained by the SCADA functional module. In this implementation, the electric power measurement and control device is applicable to an energy storage power generation system.

With reference to the twelfth possible implementation of the second aspect, in a thirteenth possible implementation, the electrical status of the energy storage battery includes a current, a voltage, a charge/discharge power, a charge/discharge state, a battery temperature, a remaining battery capacity, a battery state of health, an accumulated battery charge capacity, or an accumulated battery discharge capacity of the energy storage battery. The electrical data of the point of coupling includes a current, a voltage, or a power of the point of coupling. Electrical data of the power conversion system includes a rated voltage, a rated current, a rated power, or a configuration file of the power conversion system. The real-time communication data includes the charge/discharge power or the charge/discharge state of the energy storage battery, and the current, the voltage, or the power of the point of coupling. The non-real-time communication data includes the current, the voltage, the battery temperature, the remaining battery capacity, the battery state of health, the accumulated battery charge capacity, or the accumulated battery discharge capacity of the energy storage battery.

With reference to any one of the second aspect to the eighth possible implementation of the second aspect, in a fourteenth possible implementation, the power conversion device is a generator set, and the output ends of the plurality of generator sets are further configured to connect to a load device. The SCADA and EMS functional module is configured to obtain the electrical data of the plurality of generator sets, the electrical data of the switch device, the electrical data of the point of coupling, and electrical data of the load device. The EMS functional module is configured to generate the second control signal based on the electrical data of the plurality of generator sets, the electrical data of the switch device, the electrical data of the point of coupling, and the electrical data of the load device that are obtained by the SCADA functional module. In this implementation, the electric power measurement and control device is applicable to a power generation system in which generator sets such as a wind power generation system, a diesel power generation system, a hydropower power generation system, and a thermal power generation system are located.

With reference to the fourteenth possible implementation of the second aspect, in a fifteenth possible implementation, an electrical status of the generator set includes an output current, an output voltage, a rated power capacity, a power generation status, an available power, or a maximum power of the generator set. The electrical status of the load device includes a device status, a current power, a maximum power, or a minimum power of the load device. The electrical data of the point of coupling includes a current, a voltage, or a power of the point of coupling. The electrical data of the generator set includes a rated voltage, a rated current, a rated power, or a configuration file of the generator set. The real-time communication data includes the rated power capacity or the power generation status of the generator set, the device status or the current power of the load device, and the current, the voltage, or the power of the point of coupling. The non-real-time communication data includes the output current, the output voltage, the available power, the maximum power, and a total energy yield of the generator set, the maximum power, the minimum power, or total energy consumption of the load device, and the rated voltage, the rated current, the rated power, or the configuration file of the generator set.

According to a third aspect, this application provides a power generation system. The power generation system includes an electric power measurement and control device, a switch device, and a plurality of power conversion devices, the switch device is configured to control connection and disconnection between the plurality of power conversion devices and a power grid, output ends of the plurality of power conversion devices are configured to connect to the power grid via a point of coupling, and the electric power measurement and control device includes a first chip and a second chip. The first chip includes an electric power measurement and control functional module, and the electric power measurement and control functional module is configured to: obtain electrical data of the point of coupling, and send a first control signal to the plurality of power conversion devices and the switch device based on the electrical data of the point of coupling. The first chip is further configured to send the electrical data of the point of coupling to the second chip through a communication interface. The second chip includes a supervisory control and data acquisition (SCADA, Supervisory Control and Data Acquisition) and energy management system (EMS, Energy Management System) functional module, and the SCADA and EMS functional module is configured to: obtain electrical data of the plurality of power conversion devices and electrical data of the switch device, and generate a second control signal based on the electrical data of the plurality of power conversion devices, the electrical data of the switch device, and the electrical data of the point of coupling. The second chip is further configured to send the second control signal to the first chip through the communication interface, or the second chip is further configured to send the electrical data of the plurality of power conversion devices and the electrical data of the switch device to the first chip through the communication interface. The electric power measurement and control functional module is further configured to send a third control signal to the plurality of power conversion devices and the switch device based on the received electrical data of the plurality of power conversion devices and the received electrical data of the switch device that are sent by the second chip through the communication interface, or the received second control signal that is sent by the second chip through the communication interface.

In this implementation, the electric power measurement and control device separately integrates SCADA and EMS functions and an electric power measurement and control function on the two internal chips. In comparison with a dual control system in a power generation system in the conventional technology that has a large size, high system costs, and high complexity, a device size can be greatly reduced, and a large quantity of power supply circuits and auxiliary circuits can be saved. Therefore, the electric power measurement and control device can effectively reduce costs and complexity of the power generation system.

With reference to the third aspect, in a first possible implementation, data transmission between the first chip and the second chip includes real-time communication and non-real-time communication, and a data transmission frequency of the real-time communication is greater than a data transmission frequency of the non-real-time communication.

In this implementation, communication between the two chips is classified into real-time communication and non-real-time communication. This helps meet different transmission requirements for two types of data: real-time communication data and non-real-time communication data.

With reference to the third aspect or the first possible implementation of the third aspect, in a second possible implementation, the electric power measurement and control device includes at least one control board; and the first chip and the second chip are installed on a same control board, or the first chip and the second chip are installed on different control boards.

In this implementation, the first chip and the second chip are respectively placed on two independent peripheral circuit boards of the electric power measurement and control device, to implement independent arrangement or combination of respective functions on the two boards. This helps improve project implementation flexibility and reduce costs. In addition, the first chip and the second chip are placed on a same independent peripheral circuit board, so that the first chip and the second chip may share some chips, interfaces, and circuits. This effectively reduces costs of the electric power measurement and control device and reduces a volume of the electric power measurement and control device.

With reference to the second possible implementation of the third aspect, in a third possible implementation, a power supply interface is disposed on the control board, and the power supply interface is configured to connect to a power supply.

In this implementation, the independent external power supply interface is disposed on the control board, so that the single control board can be independently powered without a bus backplane board. This can effectively reduce the costs of the electric power measurement and control device and reduce a size of the electric power measurement and control device.

With reference to the second possible implementation of the third aspect or the third possible implementation of the third aspect, in a fourth possible implementation, a power supply board interface is disposed on the control board, and the power supply board interface is configured to supply power to the control board through a power supply board when the power supply board interface is connected to the power supply board.

In this implementation, in addition to being powered by an external power supply located outside the electric power measurement and control device, a board in the electric power measurement and control device may further be powered by a power supply board inside the electric power measurement and control device. A power supply manner of the board is diversified and flexible.

With reference to any one of the second possible implementation of the third aspect to the fourth possible implementation of the third aspect, in a fifth possible implementation, the communication interface is disposed on the control board, the control board is configured to perform data transmission with a first device through the communication interface, and the first device is a device in the power generation system other than the electric power measurement and control device.

In this implementation, the electric power measurement and control device implements communication between control boards by setting communication interfaces on the control boards. The communication between the control boards is mainly based on a communication network (for example, Ethernet) instead of a conventional inter-board interaction technology like a bus or a shared memory. Therefore, it is beneficial for distributed deployment of the boards, and is not limited by a physical distance layout.

With reference to any one of the second possible implementation of the third aspect to the fifth possible implementation of the third aspect, in a sixth possible implementation, a human-machine display interface is further disposed on the control board, and the second chip is configured to display the electrical data of the plurality of power conversion devices, the electrical data of the switch device, and the electrical data of the point of coupling on a display device through the human-machine display interface.

In this implementation, the human-machine display interface (for example, an HDMI interface) is disposed on the control board of the electric power measurement and control device, so that the electric power measurement and control device can directly perform display on an external display (for example, a notebook display) through the human-machine display interface, and no dedicated display needs to be disposed in the power generation system. This helps reduce the costs of the power generation system.

With reference to any one of the second possible implementation of the third aspect to the sixth possible implementation of the third aspect, in a seventh possible implementation, a fault alarm output interface is disposed on the control board, the power generation system further includes a redundancy device of the electric power measurement and control device, and a signal input interface is disposed on the redundancy device. The fault alarm output interface is configured to output a first alarm signal to the redundancy device when the electric power measurement and control device is faulty or powered off. The redundancy device is configured to: when the signal input interface receives the first alarm signal, send the first control signal to the plurality of power conversion devices and the switch device based on the obtained electrical data of the point of coupling, or send the third control signal to the plurality of power conversion devices and the switch device based on the received second control signal; or send the second control signal based on the obtained electrical data of the plurality of power conversion devices, the obtained electrical data of the switch device, and the obtained electrical data of the point of coupling.

In this implementation, based on the fault alarm output interface and the signal input interface disposed on each of control boards, a single control board can also support redundancy, and meet requirements of small-sized installation and low-cost and high-performance redundancy. In addition, the two control boards interact with output and input through the fault alarm output interface and the signal input interface. This can implement high-reliability fault detection and high-speed switching. Compared with a pure data communication manner, this manner has higher reliability and better switching performance.

With reference to any one of the third aspect to the seventh possible implementation of the third aspect, in an eighth possible implementation, a communication network between the first chip and the second chip is the same as a communication network between the electric power measurement and control device and a device in the power generation system other than the electric power measurement and control device.

In this implementation, when master-slave distributed expansion needs to be performed on the power generation system, because the communication network between the internal chips in the electric power measurement and control device is the same as a communication network between the electric power measurement and control device and an external device, a problem that large software and hardware development workloads are caused during distributed expansion due to differences between internal and external physical communication links and protocols can be avoided, thereby facilitating master-slave distributed expansion of the power generation system, and effectively improving distributed expansion efficiency.

With reference to the fifth possible implementation of the third aspect, in a ninth possible implementation, the communication interface includes an Ethernet interface.

With reference to any one of the third aspect to the ninth possible implementation of the third aspect, in a tenth possible implementation, the second control signal includes a control signal generated by the SCADA and EMS functional module for performing logic control or artificial intelligence (Artificial Intelligence, AI) control on the plurality of power conversion devices and the switch device. The logic control includes preset startup policy control, preset shutdown policy control, preset active power decomposition delivery policy control, preset reactive power decomposition delivery policy control, and preset frequency and voltage stabilization policy control for the power conversion device, point of coupling switch on/off control, or power adjustment control for a single power conversion device. The AI control includes rated power capacity prediction control, energy yield prediction control, or device service life prediction control for the power conversion device.

With reference to any one of the third aspect to the tenth possible implementation of the third aspect, in an eleventh possible implementation, the power conversion device is a photovoltaic inverter. The SCADA and EMS functional module is configured to: obtain the electrical data of the plurality of photovoltaic inverters, the electrical data of the switch device, and electrical data of the power generation system, and generate the second control signal based on the electrical data of the plurality of photovoltaic inverters, the electrical data of the switch device, the electrical data of the point of coupling, and the electrical data of the power generation system. In this implementation, the electric power measurement and control device is applicable to a photovoltaic power generation system.

With reference to the eleventh possible implementation of the third aspect, in a twelfth possible implementation, the real-time communication data includes the electrical data of the point of coupling, and the non-real-time communication data includes the electrical data of the power generation system and the electrical data of the photovoltaic inverters.

With reference to the eleventh possible implementation of the third aspect or the twelfth possible implementation of the first aspect, in a thirteenth possible implementation, the electrical data of the point of coupling includes a current, a voltage, or a power of the point of coupling. The electrical data of the power generation system includes a system capacity or a primary rated value and a secondary rated value of a point of coupling measurement transformer. Electrical data of the photovoltaic inverter includes a rated voltage, a rated current, a rated power, or a configuration file of the photovoltaic inverter.

With reference to any one of the third aspect to the tenth possible implementation of the third aspect, in a fourteenth possible implementation, the power conversion device is a power conversion system, the power generation system further includes an energy storage battery, and the energy storage battery is connected to an input end of the power conversion system. The SCADA and EMS functional module is configured to: obtain the electrical data of the plurality of power conversion systems, the electrical data of the switch device, and electrical data of the energy storage battery, and generate the second control signal based on the electrical data of the plurality of power conversion systems, the electrical data of the switch device, the electrical data of the point of coupling, and the electrical data of the energy storage battery. In this implementation, the electric power measurement and control device is applicable to an energy storage power generation system.

With reference to the fourteenth possible implementation of the third aspect, in a fifteenth possible implementation, the electrical status of the energy storage battery includes a current, a voltage, a charge/discharge power, a charge/discharge state, a battery temperature, a remaining battery capacity, a battery state of health, an accumulated battery charge capacity, or an accumulated battery discharge capacity of the energy storage battery. The electrical data of the point of coupling includes a current, a voltage, or a power of the point of coupling. Electrical data of the power conversion system includes a rated voltage, a rated current, a rated power, or a configuration file of the power conversion system. The real-time communication data includes the charge/discharge power or the charge/discharge state of the energy storage battery, and the current, the voltage, or the power of the point of coupling. The non-real-time communication data includes the current, the voltage, the battery temperature, the remaining battery capacity, the battery state of health, the accumulated battery charge capacity, or the accumulated battery discharge capacity of the energy storage battery.

With reference to any one of the third aspect to the tenth possible implementation of the third aspect, in a sixteenth possible implementation, the power conversion device is a generator set, and the output ends of the plurality of generator sets are further configured to connect to a load device. The SCADA and EMS functional module is configured to: obtain the electrical data of the plurality of generator sets, the electrical data of the switch device, and electrical data of the load device, and generate the second control signal based on the electrical data of the plurality of generator sets, the electrical data of the switch device, the electrical data of the point of coupling, and the electrical data of the load device. In this implementation, the electric power measurement and control device is applicable to a power generation system in which generator sets such as a wind power generation system, a diesel power generation system, a hydropower power generation system, and a thermal power generation system are located.

With reference to the sixteenth possible implementation of the third aspect, in a seventeenth possible implementation, an electrical status of the generator set includes an output current, an output voltage, a rated power capacity, a power generation status, an available power, or a maximum power of the generator set. The electrical status of the load device includes a device status, a current power, a maximum power, or a minimum power of the load device. The electrical data of the point of coupling includes a current, a voltage, or a power of the point of coupling. The electrical data of the generator set includes a rated voltage, a rated current, a rated power, or a configuration file of the generator set. The real-time communication data includes the rated power capacity or the power generation status of the generator set, the device status or the current power of the load device, and the current, the voltage, or the power of the point of coupling. The non-real-time communication data includes the output current, the output voltage, the available power, the maximum power, and a total energy yield of the generator set, the maximum power, the minimum power, or total energy consumption of the load device, and the rated voltage, the rated current, the rated power, or the configuration file of the generator set.

### BRIEF DESCRIPTION OF DRAWINGS

FIG. 1 is a diagram of an application scenario of a power generation system according to this application;
FIG. 2 is a diagram of a structure of a power generation system according to this application;
FIG. 3 is a diagram of a structure of an electric power measurement and control device according to this application;
FIG. 4 is a diagram of another structure of an electric power measurement and control device according to this application;
FIG. 5 is a diagram of a structure of distributed deployment of control boards according to this application;
FIG. 6 is a diagram of a structure of a single control board according to this application;
FIG. 7 is a diagram of a redundancy structure of a single control board according to this application;
FIG. 8 is a diagram of another redundancy structure of a single control board according to this application;
FIG. 9 is a diagram of a redundancy structure of a dual control board according to this application;
FIG. 10 is a diagram of another structure of an electric power measurement and control device according to this application;
FIG. 11 is a diagram of another structure of an electric power measurement and control device according to this application;
FIG. 12 is a diagram of a structure of a second chip according to this application;
FIG. 13 is a diagram of another structure of an electric power measurement and control device according to this application;
FIG. 14 is a diagram of another structure of an electric power measurement and control device according to this application; and
FIG. 15 is a diagram of still another structure of an electric power measurement and control device according to this application.

### DESCRIPTION OF EMBODIMENTS

A power generation system provided in this application is applicable to a plurality of application fields such as a new energy smart microgrid field, a power transmission and distribution field, a new energy field (for example, a photovoltaic power station grid connection field or a wind power station grid connection field), a photovoltaic power generation field, a PV+ESS power generation field, an energy storage power generation field, and a wind power generation field. The power generation system provided in this application may be a photovoltaic power generation system, an energy storage power generation system, a wind power generation system, a diesel power generation system, a hydropower power generation system, a thermal power generation system, or the like, and is applicable to different application scenarios such as photovoltaic power supply scenarios (including a large-sized photovoltaic power station scenario, a small- and medium-sized distributed photovoltaic power station scenario, a household photovoltaic system scenario, and the like), PV+ESS power supply scenarios (including a large-sized PV+ESS power station scenario, a small- and medium-sized distributed PV+ESS power station scenario, a household PV+ESS power station system scenario, and the like), an energy storage power supply scenario, a wind power supply scenario, a diesel power supply scenario, a hydropower power supply scenario, and a thermal power supply scenario. The following uses the photovoltaic power supply scenario as an example for description.

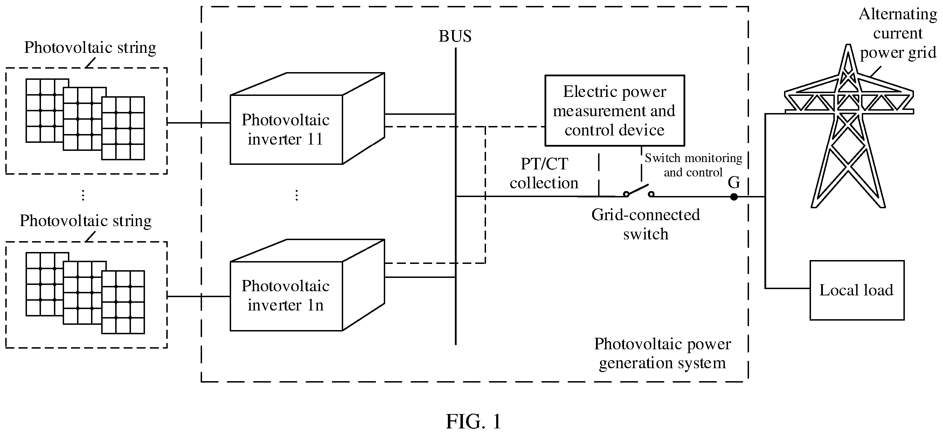

FIG. 1 is a diagram of an application scenario of a power generation system according to this application. In the photovoltaic power supply scenario, the power generation system provided in this application may be the photovoltaic power generation system shown in FIG. 1. The power generation system includes power conversion devices and a switch device. The power conversion devices and the switch device provided in this application may be photovoltaic inverters and a grid-connected switch shown in FIG. 1. As shown in FIG. 1, the photovoltaic power generation system includes a photovoltaic inverter 11, ..., a photovoltaic inverter 1n, the grid-connected switch, and an electric power measurement and control device, where n is an integer greater than 1. An input end of each of the n photovoltaic inverters is connected to a photovoltaic string. After being connected in parallel to a bus BUS, output ends of the n photovoltaic inverters are connected to an alternating current power grid or a local load after successively passing through the grid-connected switch and a point of coupling G. The electric power measurement and control device includes a first chip and a second chip. The first chip includes an electric power measurement and control functional module. The electric power measurement and control functional module is configured to: obtain electrical data of the point of coupling, and send a first control signal to the n photovoltaic inverters and the grid-connected switch based on the electrical data of the point of coupling. The first chip is further configured to send the electrical data of the point of coupling to the second chip through a communication interface. The second chip includes a SCADA and EMS functional module. The SCADA and EMS functional module is configured to: obtain electrical data of each of the n photovoltaic inverters and electrical data of the switch device, and generate a second control signal based on the electrical data of each photovoltaic inverter, the electrical data of the switch device, and the electrical data of the point of coupling. The second chip is further configured to send the second control signal to the first chip through the communication interface, or the second chip is further configured to send the electrical data of each of the n photovoltaic inverters and the electrical data of the switch device to the first chip through the communication interface. The electric power measurement and control functional module is further configured to send a third control signal to each of the n photovoltaic inverters and the switch device based on the received electrical data of each of the n photovoltaic inverters and the received electrical data of the switch device that are sent by the second chip through the communication interface, or based on the received second control signal that is sent by the second chip through the communication interface.

It may be understood that, the electric power measurement and control device separately integrates SCADA and EMS functions and an electric power measurement and control function on the two internal chips. In comparison with a dual control system in a power generation system in the conventional technology that has a large size, high system costs, and high complexity, a device size can be greatly reduced, and a large quantity of power supply circuits and auxiliary circuits can be saved. Therefore, the electric power measurement and control device can effectively reduce costs and complexity of the photovoltaic power generation system. The foregoing is merely an example of the application scenario of the power generation system provided in this application, but is not exhaustive. The application scenario is not limited in this application.

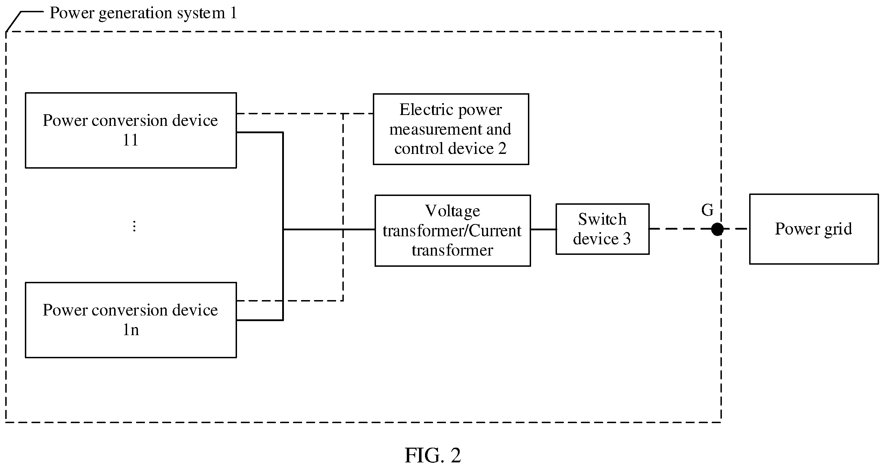

The following describes, with reference to FIG. 2 to FIG. 13, working principles of the power generation system and the electric power measurement and control device provided in this application by using examples.

FIG. 2 is a diagram of a structure of the power generation system according to this application. As shown in FIG. 2, a power generation system 1 includes a power conversion device 11, ..., a power conversion device 1n, an electric power measurement and control device 2, and a switch device 3, where n is an integer greater than 1. Output ends of the n power conversion devices are connected to a power grid via a point of coupling G after passing through the switch device 3. The power conversion device includes a photovoltaic inverter, a power conversion system (Power Conversion System, PCS), a generator set, or the like. The generator set includes a wind turbine generator set, a diesel generator set, a hydropower generator set, a thermal generator set, and the like. When the power conversion device is a photovoltaic inverter or a PCS, input ends of the n power conversion devices are connected to a direct current power supply. Specifically, when the power conversion device is a photovoltaic inverter, the direct current power supply includes a photovoltaic string; or when the power conversion device is a PCS, the direct current power supply includes an energy storage battery rack. The switch device 3 includes switch devices such as a circuit breaker and a knife switch of a power line, and is configured to control connection and disconnection between the n power conversion devices and the power grid. Optionally, the switch device 3 may be further connected between the output ends of the n power conversion devices and an internal convergence line, and is configured to control connection and disconnection between the n power converters and the internal convergence line, to control connection and disconnection between the n power converters and the power grid. The electric power measurement and control device 2 is an electronic device that can collect, transform, calculate, and convert alternating current electrical quantity or direct current electrical quantity of a power node in the power generation system, for example, a point of coupling, a transmission line point, or a bus tie switch of a busbar, into a digital signal, or can directly collect a digital signal of a digital current transformer and a digital signal of a voltage transformer, to implement information collection, processing, and information transmission of primary equipment and secondary equipment in the power generation system, and can receive and send telemetering, teleindication, remote control, and tele-adjusting signals in an automation system in the electric power measurement and control device 2 to control a controlled object. Specifically, the electric power measurement and control device 2 provides real-time power collection and control functions (that is, power measurement and control functions) for each power node and primary power generation, transmission, distribution, and power-consuming equipments based on a current, a voltage, and a switch status. Typical applications include a transformer, a bus, a line measurement and control device, a relay protection device, a ground cable selection device, a fault oscillograph, a frequency modulation device, a grid connection synchronization device, a voltage parallel device, and the like, and these devices are usually used in power generation, transmission, distribution, and power-consuming power systems with 220 V/380 V, 10 kV, 35 kV, 110 kV, or a higher voltage level. The primary equipment is a high-voltage electrical device that is directly used in a production process of producing, transmitting, and distributing electric energy. The secondary equipment is a low-voltage electrical device that monitors, controls, adjusts, and protects work of the primary equipment, and provides a running working condition or a production command signal for operations and maintenance personnel. The power grid includes an alternating current power grid and a direct current power grid.

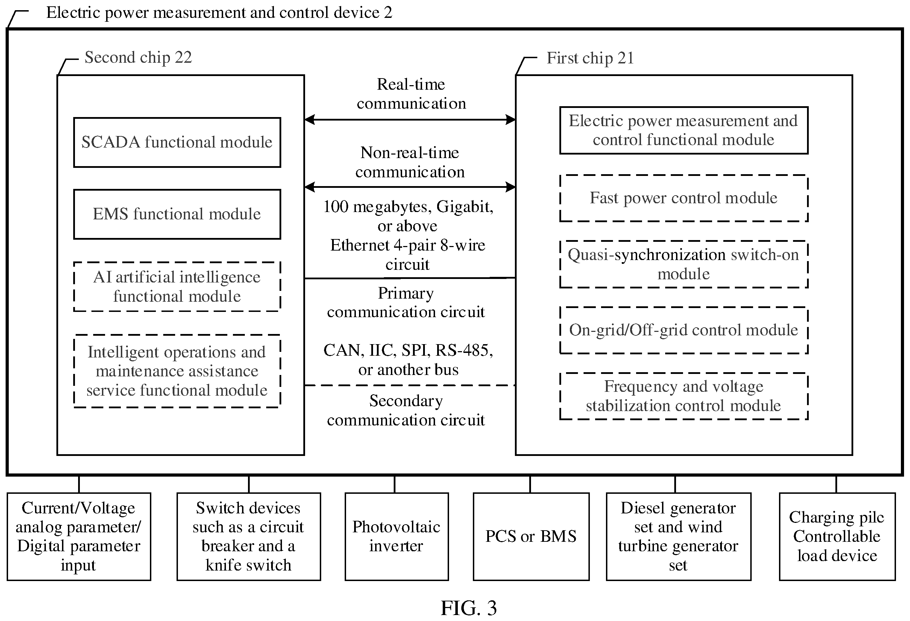

FIG. 3 is a diagram of a structure of the electric power measurement and control device according to this application. As shown in FIG. 3, the electric power measurement and control device 2 includes a first chip 21 and a second chip 22. The first chip 21 communicates with the second chip 22 through a communication interface. The first chip 21 includes an electric power measurement and control functional module, and the electric power measurement and control functional module is configured to: obtain electrical data of the point of coupling G, and send a first control signal to the n power conversion devices and the switch device 3 based on the electrical data of the point of coupling G. The electrical data of the point of coupling G is an electrical status of the point of coupling G, and the electrical status of the point of coupling G includes a current, a voltage, a power, or the like of the point of coupling G. When the power grid is an alternating current power grid, the electrical status of the point of coupling G further includes a frequency of the point of coupling G.

Specifically, the electric power measurement and control functional module is configured to perform, through an alternating current/direct current analog or digital sampling module or circuit and a digital signal input DI/digital signal output DO module (or circuit), or an analog signal input AI/analog signal output AO module (or circuit), a computing processing chip, and an auxiliary circuit, sampling at a frequency not less than 1000 Hz on one or more power nodes in a single-phase or three-phase electric power system, such as a point of coupling, a transmission line point, a generating equipment outlet, and a bus tie switch of a busbar. After converting a related analog parameter obtained through sampling into a digital parameter, the electric power measurement and control functional module calculates an amplitude of a current/voltage, a power, a frequency, and a phase angle, and sends the first control signal to the power conversion devices (for example, photovoltaic inverters/PCSs) and the switch device 3 in the power generation system 1 based on the collected value or the calculated value, that is, electrical data of the power node and data such as a fixed value or a parameter stored in the device. The first control signal is used to perform digital signal output DO or communication control and recording on the power conversion devices and the switch device 3 in the power generation system 1. The digital signal output DO or communication control and recording herein includes but is not limited to power limiting control, constant power control, constant voltage control, power oscillation damping, virtual inertia control, grid connection synchronization switch-on, microgrid frequency and voltage stabilization control, undercurrent or overcurrent alarm or protection, undervoltage or overvoltage alarm or protection, underfrequency or overfrequency alarm or protection, or underpower or overpower alarm or protection, fault recording, fault disconnection, and the like.

Optionally, the electric power measurement and control functional module is further configured to send a third control signal to the n power conversion devices and the switch device 3 based on a received second control signal that is sent by the second chip 22 through the communication interface. The second control signal includes a control signal generated by a SCADA and EMS functional module for performing logic control or artificial intelligence (Artificial Intelligence, AI) control on the n power conversion devices and the switch device 3, that is, a logic control signal or an AI control signal. Herein, for descriptions of the logic control and the AI control, refer to descriptions in subsequent embodiments. Details are not described herein. The third control signal may be the same as or different from the second control signal. For example, the second control signal may be a power limiting control signal, and the third control signal may be a more specific control signal included in the power limiting control signal, for example, a voltage limiting control signal or a current limiting control signal.

Optionally, the electric power measurement and control functional module is further configured to: receive electrical data of the n power conversion devices and electrical data of the switch device 3 that are sent by the second chip 22 through the communication interface, and send the third control signal to the n power conversion devices and the switch device 3. For example, the third control signal includes a control signal generated by the electric power measurement and control functional module for performing logic control or AI control on the n power conversion devices and the switch device 3.

Optionally, the first chip 21 may further include at least one of a fast power control module, a quasi-synchronization switch-on module, an on-grid/off-grid control module, and a frequency and voltage stabilization control module. The fast power control module is configured to perform fast active and reactive power distribution and forwarding. The quasi-synchronization switch-on module is configured to: detect voltage levels on a power station side and a power grid side; and when an amplitude difference, a frequency difference, and a phase difference of voltages on the two sides meet switch-on conditions, implement synchronization switch-on. The on-grid/off-grid control module is configured to control planned or unplanned on-grid-to-off-grid switching. The frequency and voltage stabilization control module is configured to: take a load control measure when frequency fluctuation exceeds a stability limit value, to maintain frequency stabilization; and take measures such as reactive generating equipment switching when voltage fluctuation exceeds a stability limit value, to maintain voltage stabilization.

The second chip 22 includes the SCADA and EMS functional module. The SCADA and EMS functional module is configured to: obtain the electrical data of the n power conversion devices and the electrical data of the switch device 3, receive the electrical data of the point of coupling G that is sent by the first chip 21, and generate the second control signal based on the electrical data of the n power conversion devices, the electrical data of the switch device 3, and the electrical data of the point of coupling G. Specifically, the SCADA and EMS functional module is configured to perform, based on the electrical data of the n power conversion devices, the electrical data of the switch device 3, and the electrical data of the point of coupling G, logic control or AI control on the n power conversion devices and the switch device 3, and generate the second control signal based on the logic control or the AI control, that is, a logic control signal corresponding to the logic control or an AI control signal corresponding to the AI control. Electrical data of the power conversion device includes a preset electrical parameter and an electrical status. The preset electrical parameter of the power conversion device includes a rated voltage, a rated current, a rated power, a configuration file, or the like of the power conversion device. The electrical status of the power conversion device includes a current, a voltage, a power, or the like of the power conversion device. When the power grid is an alternating current power grid, the preset electrical parameter of the power conversion device may further include a rated frequency of the power conversion device, and the electrical status of the power conversion device may further include a frequency of the power conversion device. The electrical data of the switch device 3 includes an on/off state of the switch device 3, voltages on two sides of the switch device 3, and the like. The logic control may be preset. The logic control includes preset startup policy control, preset shutdown policy control, preset active power decomposition delivery policy control, preset reactive power decomposition delivery policy control, and preset frequency and voltage stabilization policy control for the power conversion device, point of coupling switch on/off control, or power adjustment control for a single power conversion device. The logic control may be displayed on a human-machine logic development and configuration page for personnel to read, modify, and debug. The AI control includes rated power capacity prediction control, energy yield prediction control, device service life prediction control, or the like for the power conversion device.

A function of the SCADA and EMS functional module varies with a type of the power generation system 1. Details are as follows:
In an embodiment, when the power generation system 1 is a photovoltaic power generation system, the power conversion device is a photovoltaic inverter. The SCADA and EMS functional module is configured to: obtain the electrical data of the n photovoltaic inverters, the electrical data of the switch device 3, and electrical data of the photovoltaic power generation system, and generate the second control signal based on the electrical data of the n photovoltaic inverters, the electrical data of the switch device 3, the electrical data of the point of coupling G, and the electrical data of the photovoltaic power generation system. The electrical data of the photovoltaic power generation system may be a preset electrical parameter of the photovoltaic power generation system, and the preset parameter of the photovoltaic power generation system includes a system capacity, and a primary rated value and a secondary rated value of a point of coupling measurement transformer. Herein, the point of coupling measurement transformer corresponds to the voltage transformer or the current transformer shown in FIG. 2. The electrical data of the photovoltaic inverter includes the preset electrical parameter and the electrical status, and the preset electrical parameter of the photovoltaic inverter includes the rated voltage, the rated current, the rated power, or the configuration file of the photovoltaic inverter. Herein, the configuration file includes content such as a communication configuration file, a defined point list, or a communication protocol. The electrical status of the photovoltaic inverter includes the voltage, the current, the power, or the like of the photovoltaic inverter.

In an embodiment, when the power generation system 1 is an energy storage power generation system, the power conversion device is a PCS, the energy storage power generation system further includes an energy storage battery, and the energy storage battery is connected to an input end of the PCS. The SCADA and EMS module is configured to: obtain the electrical data of the n PCSs, the electrical data of the switch device 3, and electrical data of the energy storage battery, and generate the second control signal based on the electrical data of the n PCSs, the electrical data of the switch device 3, the electrical data of the point of coupling G, and the electrical data of the energy storage battery. The electrical data of the energy storage battery may be an electrical status of the energy storage battery. The electrical status of the energy storage battery includes a current, a voltage, a charge/discharge power, a charge/discharge state, a battery temperature, a remaining battery capacity, a battery state of health, an accumulated battery charge capacity, or an accumulated battery discharge capacity of the energy storage battery. The electrical data of the PCS includes the preset electrical parameter and the electrical status, and the preset electrical parameter of the PCS includes the rated voltage, the rated current, the rated power, or the configuration file of the PCS. The electrical status of the PCS includes the voltage, the current, the power, or the like of the PCS.

In an embodiment, when the power generation system 1 is a system including generator sets, the power conversion device is a generator set. In addition to being connected to the power grid via the point of coupling G, the output end of the generator set is further connected to a load device. The SCADA and EMS module is configured to: obtain the electrical data of the n generator sets, the electrical data of the switch device 3, and electrical data of the load device, and generate the second control signal based on the electrical data of the n generator sets, the electrical data of the switch device 3, the electrical data of the point of coupling G, and the electrical data of the load device. The electrical data of the generator set may be the electrical status of the generator set, and the electrical status of the generator set includes an output current, an output voltage, a rated power capacity, a power generation status, an available power, or a maximum power of the generator set. The electrical data of the load device may be an electrical status of the load device, and the electrical status of the load device includes a device status, a current power, a maximum power, or a minimum power of the load device. The electrical data of the generator set includes the preset electrical parameter and the electrical status. The preset electrical parameter of the generator set includes the rated voltage, the rated current, the rated power, or the configuration file of the generator set. The electrical status of the generator set includes the voltage, the current, the power, or the like of the generator set.

Specifically, the SCADA and EMS functional module includes a SCADA functional module and an EMS functional module. The SCADA functional module is configured to: perform, by using one or more types of communication technologies in the Ethernet Ethernet, RS-485, CAN, PLC, RS-232, Wi-Fi, 5G, 4G, Bluetooth, Greentooth, and PROFIBUS technologies, direct or indirect data communication interaction with generating equipments such as the photovoltaic inverter or the PCS, a battery management system (BATTERY MANAGEMENT SYSTEM, BMS), a diesel/gas generator set, and a wind turbine generator set in the power generation system, switch devices such as the circuit breaker and the knife switch of the power line in the power generation system, and other reactive generating equipments such as a capacitor or a reactor included in the power generation system; or perform detection and control via an input DI/AI or an output DO/AO of the electric power measurement and control device, and implement a human-machine display interface function and functions of collecting and storing a signal status of a key device in the system. The signal status of the key device includes the electrical data of the power conversion device in the power generation system, the electrical data of the switch device, and the like. The human-machine display interface function includes but is not limited to: performing direct display on an external display through a human-machine display interface provided by the electric power measurement and control device based on data displayed in a system main wiring diagram, a simulation diagram, a trend diagram, report display, fault display, and an alarm image that are driven by real-time data; or performing indirect display and human-machine operations through a communication interface (for example, an Ethernet interface) provided by a machine. In addition, after receiving the electrical data of the point of coupling G that is sent by the first chip 21, the SCADA functional module implements storage and human-machine display interface functions for the electrical data of the point of coupling G.

The EMS functional module is configured to perform, based on the data obtained by the SCADA functional module, logic control or AI control on the generating equipment (including the power conversion device) and the switch device in the power generation system. For example, the EMS functional module is configured to implement a function of starting, shutting down, performing active power decomposition delivery, performing reactive power decomposition delivery, performing frequency stabilization control, performing voltage stabilization control, or performing coordinated economic scheduling and control for photovoltaic energy storage for each generating equipment in the power generation system. The EMS functional module may further include functions such as past, current and future rated power capacities, an energy yield, electrochemical energy storage or fossil energy storage energy, device service life status estimation of each subcomponent of the power generation system, system economic analysis and graphical (for example, a curve, a pie chart, or a bar chart) data display, and revenue management.

Optionally, the second chip 22 may further include an AI artificial intelligence functional module. The AI artificial intelligence functional module is configured to perform mathematical modeling and solution artificial intelligence prediction and control through neural network deep learning based on current and historical data driving of the power generation system, including but not limited to photovoltaic/storage rated power capacity prediction, load power prediction, electricity market price prediction, remaining energy storage battery capacity/energy storage battery state of health prediction, system security and performance status diagnosis and evaluation of the energy storage battery, full-lifecycle diagnosis of a device status of an integrated PV+ESS+charger system, optimization or artificial intelligence control based on the foregoing related prediction, optimization or artificial intelligence control based on a diagnosis result, and economic optimization or artificial intelligence control based on a period or a full lifecycle.

Optionally, the second chip 22 may further include an intelligent operations and maintenance assistance service functional module. The intelligent operations and maintenance assistance service functional module is configured to assist in performing auxiliary services such as system operations and maintenance, offline overhaul and maintenance policy push, data and operations and maintenance management services, a public cloud/private cloud interface service, and an electric power production plan/overhaul and maintenance plan operation ticket service.

In addition, because a power of the second chip 22 is high, to implement fan-free heat dissipation of the high-power chip, a heat sink may be pasted on the second chip 22 via thermally conductive silicon gel, and heat dissipation holes are disposed on mechanical parts on an upper side and a left side and a right side of the heat sink. In this way, even if the electric power measurement and control device 2 has SCADA and EMS functions, no additional fan is required for heat dissipation.

Data transmission between the second chip 22 and the first chip 21 includes real-time communication and non-real-time communication. A communication frequency of the real-time communication is greater than a communication frequency of the non-real-time communication, and different communication protocols are used for the real-time communication and the non-real-time communication.

Specifically, the electric power measurement and control device 2 may classify synchronous data into at least two types based on a data type, granularity, and communication frequency requirement of the synchronous data exchanged between the second chip 22 and the first chip 21, for example, real-time communication data and non-real-time communication data. The real-time communication data is Boolean, integer, floating-point, and simple Struct structure data that has a high communication frequency (that is, a short synchronization time), a high real-time requirement, and a small data granularity, and includes but is not limited to the electrical status of the point of coupling, for example, a current amplitude, a voltage amplitude, the frequency, and a power of the point of coupling. The non-real-time communication data is mainly data that has a communication frequency lower than the communication frequency of the real-time communication data (that is, a synchronization time longer than the synchronization time of the real-time communication data), and a low real-time requirement. In addition to the Boolean, integer, floating-point, and simple Struct structure data, the non-real-time communication data further includes data such as large data structure Struct data, large memory block or file data, and stream data. The non-real-time communication data includes but is not limited to configuration files, parameter fixed values (including but not limited to a communication point list configuration file, a COMTRADE recording configuration file, and a GOOSE input/output configuration file), and the like of the second chip 22 and the first chip 21. For example, when the power conversion device is a photovoltaic inverter, the real-time communication data includes the electrical status of the point of coupling G, and the non-real-time data includes the electrical data of the photovoltaic power generation system and the preset electrical parameter of the photovoltaic inverter. When the power conversion device is a PCS, the real-time communication data includes the electrical status of the point of coupling G, and the charge/discharge power or the charge/discharge state of the energy storage battery, and the non-real-time communication data includes the current, the voltage, the battery temperature, the remaining battery capacity, the battery state of health, the accumulated battery charge capacity, or the accumulated battery discharge capacity of the energy storage battery, and the preset electrical parameter of the PCS. When the power conversion device is a generator in a generator set, the real-time communication data includes the electrical status of the point of coupling G, the rated power capacity or the power generation status of the generator set, and the device status or the current power of the load device, and the non-real-time communication data includes the preset electrical parameter of the generator set, the output current, the output voltage, the available power, the maximum power or a total energy yield of the generator set, and the maximum power, the minimum power, or total energy consumption of the load device.

Based on classification of the synchronous data exchanged between the second chip 22 and the first chip 21, the electric power measurement and control device 2 may classify communication between the second chip 22 and the first chip 21 into real-time communication and non-real-time communication. A communication frequency of the real-time communication is greater than a communication frequency of the non-real-time communication, and different communication protocols are used for the real-time communication and the non-real-time communication. For example, the real-time communication is communication in which a data transmission time interval is less than 10 ms (or 1s) and data is continuously transmitted, and the non-real-time communication is communication in which a data transmission time interval is greater than or equal to 10 ms (or 1s) and data is not continuously transmitted. The electric power measurement and control device 2 further includes a primary communication circuit. The primary communication circuit is connected to a communication interface of the first chip 21 and a communication interface of the second chip 22, and is configured to support communication between the second chip 22 and the first chip 21. Herein, a communication interface of a chip may be understood as a communication end of the chip. Optionally, the electric power measurement and control device 2 further includes a secondary communication circuit. The secondary communication circuit is connected to the communication interface of the first chip 21 and the communication interface of the second chip 22, and may also be configured to support the communication between the second chip 22 and the first chip 21. In addition, the secondary communication circuit is different from the primary communication circuit. For example, a communication protocol used in the real-time communication may be a GOOSE or UDP communication protocol, and a communication protocol used in the non-real-time communication may be a TCP communication protocol. Correspondingly, the primary communication circuit may be a 100 megabytes, Gigabits, or above Ethernet 4-pair 8-wire circuit, and the secondary communication circuit may be a CAN, IIC, SPI, RS-485, or another private bus circuit, or a shared memory circuit. In addition, the real-time communication and the non-real-time communication between the second chip 22 and the first chip 21 share a same physical communication medium. For example, when the primary communication circuit is a 100 megabytes, Gigabits, or above Ethernet 4-pair 8-wire circuit, physical communication media of the real-time communication and the non-real-time communication between the second chip 22 and the first chip 21 are both a twisted pair and an optical fiber.

It may be understood that communication circuits between the second chip 22 and the first chip 21 are diversified, and flexibility is high. In addition, the communication between the second chip 22 and the first chip 21 is classified into the real-time communication and the non-real-time communication. This helps meet different transmission requirements for two types of data: real-time communication data and non-real-time communication data. Furthermore, the second chip 22 and the first chip 21 run independently based on the communication, which can achieve same reliability as a conventional EMS server+controller solution. When one of the two chips is faulty or abnormal, working of the other normal chip is not affected. This can improve working stability of the electric power measurement and control device 2. Furthermore, the communication between the second chip 22 and the first chip 21 is mainly based on the Ethernet instead of a conventional inter-CPU interaction technology like a bus or a shared memory. This facilitates distributed deployment of the chips and is not limited by a physical distance layout. Finally, the real-time communication and the non-real-time communication between the first chip 21 and the second chip 22 share the same physical communication medium. Compared with a solution in which two different communication media are respectively deployed for the real-time communication and the non-real-time communication, and the real-time communication and the non-real-time communication share a same driver, this solution can reduce hardware costs, reduce a development workload, and improve communication efficiency.

For example, a real-time communication scenario between the two chips is as follows: The electric power measurement and control functional module in the first chip 21 obtains the electrical data of the point of coupling G, for example, a real-time current and a real-time voltage of the point of coupling G, and calculates a real-time power of the point of coupling G based on the collected real-time voltage and real-time current of the point of coupling G, to send the real-time power of the point of coupling G to the second chip 22 according to the GOOSE or the UDP communication protocol. The EMS functional module in the second chip 22 determines a target working parameter of each of the n power conversion devices, for example, a target output voltage, based on the real-time power and a target power of the point of coupling G, and sends the target output voltage of the power conversion device to the first chip 21 according to the GOOSE or the UDP communication protocol. The first chip 21 sends the target output voltage to each power conversion device in the power generation system 1 according to the GOOSE or the UDP communication protocol. Then, each power conversion device controls its own output voltage based on the target output voltage, so that a power of the point of coupling G reaches the target power. In this way, the real-time communication between the second chip 22 and the first chip 21 is implemented, and the electric power measurement and control device 2 quickly controls each power conversion device. For another example, after starting to work, the second chip 22 sends a small heartbeat of the second chip 22 to the first chip 21 every 5 ms.

For example, a non-real-time communication scenario between the two chips is as follows: After the electric power measurement and control device is started, the first chip 21 and the second chip 22 exchange various configuration files for the first time; after a period of time, when related configuration of any one of the first chip 21 and the second chip 22 is updated, non-real-time update synchronization is triggered; in addition, for example, some power statistics information is also updated in a specific period; and some device operations and action recording information are also synchronously updated in a specific period.

In addition, a communication network between the second chip 22 and the first chip 21 is the same as a communication network between the electric power measurement and control device 2 and a device in the power generation system 1 other than the electric power measurement and control device 2. For example, the communication network between the second chip 22 and the first chip 21 is the Ethernet, and the communication network between the electric power measurement and control device 2 and the device (for example, the power conversion device) in the power generation system 1 other than the electric power measurement and control device 2 is also the Ethernet. Further, when master-slave distributed expansion needs to be performed on the power generation system 1, because the communication network between the internal chips in the electric power measurement and control device 2 is the same as a communication network between the electric power measurement and control device 2 and an external device, a problem that large software and hardware development workloads are caused during distributed expansion due to differences between internal and external physical communication links and protocols can be avoided, thereby facilitating master-slave distributed expansion of the power generation system 1, and effectively improving distributed expansion efficiency.

In this embodiment of this application, the electric power measurement and control device 2 separately integrates the SCADA and EMS functions and an electric power measurement and control function on the internal second chip 22 and the internal first chip 21. In comparison with a dual control system in a power generation system in the conventional technology that has a large size, high system costs, and high complexity, a device size can be greatly reduced, and a large quantity of power supply circuits and auxiliary circuits can be saved. Therefore, the electric power measurement and control device 2 can effectively reduce costs and complexity of the power generation system 1.

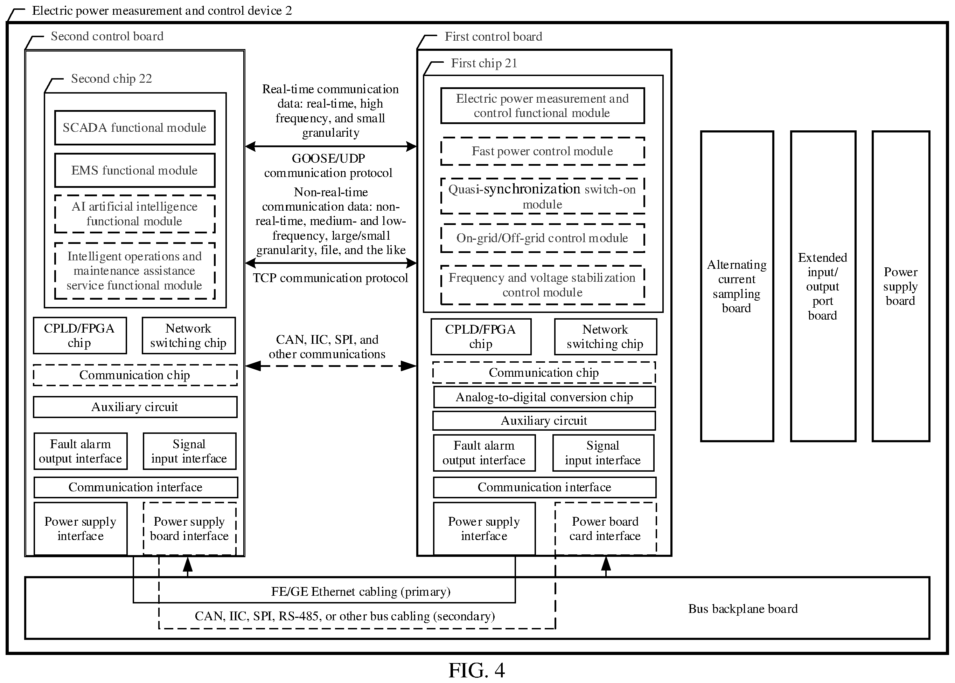

The electric power measurement and control device 2 includes at least one control board. For example, the at least one control board includes a first control board and a second control board, and the first chip 21 and the second chip 22 are respectively installed on the first control board and the second control board. For details, refer to an electric power measurement and control device shown in FIG. 4. As shown in FIG. 4, compared with the electric power measurement and control device 2 shown in FIG. 3, the first chip 21 and the second chip 22 in the electric power measurement and control device 2 shown in FIG. 4 are respectively disposed on the first control board and the second control board. Specifically, the electric power measurement and control device 2 shown in FIG. 4 further includes the first control board and the second control board, and the second chip 22 is disposed on the first control board, and the first chip 21 is disposed on the second control board. The board herein is a type of printed circuit board (PCB board for short), has a plug insert during manufacturing, and may be inserted into a slot of a main circuit board of a computer. The board herein may also be considered as a plug-in unit.

A complex programmable logic device (Complex Programmable logic device, CPLD)/field programmable gate array (Field Programmable Gate Array, FPGA) chip, a network switching chip, and an auxiliary circuit may be disposed on each of the first control board and the second control board. An analog-to-digital conversion chip may be further disposed on the first control board. The CPLD/FPGA chip is configured to support Ethernet storm filtering. The network switching chip is an integrated circuit chip used for network switching, is a core component of a network switch, and can implement functions such as data packet forwarding and route selection. A principle of the network switching chip is to implement communication between network devices by forwarding a data packet from one port to another port. The auxiliary circuit is configured to meet requirements such as a power supply requirement, a signal input/output channel requirement, and a buffer requirement of the chip. Optionally, a communication chip may be further disposed on each of the first control board and the second control board. For example, the communication chip includes a Wi-Fi/4G/5G chip.

The electric power measurement and control device 2 further includes a bus backplane board, and a communication circuit between the first control board and the second control board is disposed on the bus backplane board. The communication circuit includes one or more wiring circuits based on FE or GE Ethernet, and optionally, other secondary CAN, IIC, or SPI bus communication circuits, or other secondary private bus communication circuits. In addition, a power supply, signal wiring between other plug-in units, and at least four indicator lamps may further be disposed on the bus backplane board. For example, the indicator lamp on the bus backplane board may be used to indicate a running status, a communication status, and the like of the bus backplane board. It may be understood that, boards other than the bus backplane board in the electric power measurement and control device 1 are connected through the bus backplane board, and may be replaced independently based on an actual application requirement, thereby increasing combination convenience and reducing overall application costs of the electric power measurement and control device 2.

Communication between the first control board and the second control board may be implemented based on a communication circuit on the bus backplane board. Communication data between the first control board and the second control board may be classified into real-time communication data and non-real-time communication data. Correspondingly, the communication between the first control board and the second control board may be classified into real-time communication and non-real-time communication. Herein, for specific descriptions of a communication data type, the communication protocol, and the communication circuit between the first control board and the second control board, refer to corresponding descriptions of the communication part between the second chip 22 and the first chip 21 in the electric power measurement and control device 2 shown in FIG. 3. Details are not described herein again. It may be understood that the first control board and the second control board run independently based on communication, which can achieve same reliability as a conventional EMS server+controller solution. When one of the two control boards fails or is abnormal, the other normal control board is not affected, and working stability of the electric power measurement and control device 2 can be improved. In addition, the communication between the two control boards is classified into real-time communication and non-real-time communication. This helps meet different transmission requirements for two types of data: real-time communication data and non-real-time communication data.

The communication between the first control board and the second control board may be implemented based on an invisible communication circuit (for example, 100 megabytes or Gigabit Ethernet cabling) on the bus backplane board, or based on an explicit exposed communication interface.

Specifically, a communication interface is further disposed on the first control board. The first control board is configured to perform data transmission with the second control board through the communication interface, and perform data transmission with a first device through the communication interface. The first device is a device in the power generation system 1 other than the electric power measurement and control device 2. In other words, the communication interface on the first control board may support communication between the first control board and the second control board, and support communication between the first control board and the first device. Correspondingly, a communication interface is further disposed on the second control board. The second control board is configured to perform data transmission with the first control board through the communication interface, and perform data transmission with the first device through the communication interface. In other words, the communication interface on the second control board may support communication between the second control board and the first control board, and support communication between the second control board and the first device. For example, the communication interfaces on the first control board and the second control board are both Ethernet interfaces, and the Ethernet interface provides a communication soft bus capable of multi-link instantiation that includes two or more Ethernet communication protocols: GOOSE/UDP and TCP. In addition, a communication network between the two control boards is the same as a communication network between the electric power measurement and control device 2 and an external device, thereby facilitating master-slave distributed expansion of the power generation system 1, and effectively improving distributed expansion efficiency. Herein, there may be one or more communication interfaces on each of the first control board and the second control board. This powered off not limited in this application.

It may be understood that, the communication between the two control boards is mainly based on the communication network (for example, the Ethernet) instead of a conventional inter-board interaction technology like a bus or a shared memory. This facilitates distributed deployment of the boards and is not limited by a physical distance layout.

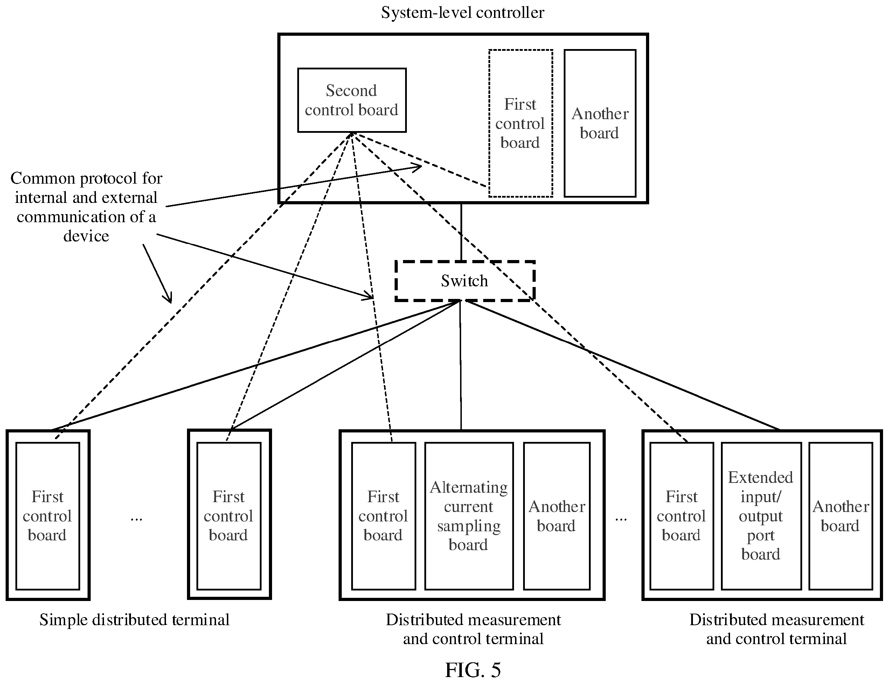

For example, refer to FIG. 5. FIG. 5 is a diagram of a structure of distributed deployment of control boards according to this application. As shown in FIG. 5, a first control board and a second control board may be both located in a system-level controller, or may be located in a system-level controller and a simple distributed terminal or a distributed measurement and control terminal respectively. The following description is based on an example in which the first control board and the second control board are located in different devices. The second control board is located in a system-level controller. A plurality of first control boards are located in a plurality of simple distributed terminals and a plurality of first control boards are located in a plurality of distributed measurement and control terminals respectively. Both the simple distributed terminal and the distributed measurement and control terminal are electric power measurement and control devices. The simple distributed terminal includes only first control boards. In addition to a first control board, the distributed measurement and control terminal further includes an alternating current sampling board and another board. When a distance between the system-level controller and the simple distributed terminal and a distance between the system-level controller and the distributed measurement and control terminal are short (for example, within 50 meters), communication between the second control board located in the system-level controller and the first control board located in the simple distributed terminal and communication between the second control board located in the system-level controller and the first control board located in the distributed measurement and control device may be implemented based on a communication interface disposed on each control board. When a distance between the system-level controller and the simple distributed terminal and a distance between the system-level controller and the distributed measurement and control terminal are long (for example, greater than 50 meters), communication between the second control board located in the system-level controller and the first control board located in the simple distributed terminal and communication between the second control board located in the system-level controller and the first control board located in the distributed measurement and control device may be implemented through a switch based on a communication interface disposed on each control board. Further, the first control board and the second control board in this application do not need to distinguish whether they are located in a same chassis or are located in different chassis, to implement distributed deployment, and do not need to distinguish between local deployment and remote deployment. Extended signal processing of the power generation system 1 facilitates normalization, and helps the power generation system 1 implement an advanced high-speed complex system function.

Refer to FIG. 4 again. As shown in FIG. 4, a power supply interface is further disposed on each of the first control board and the second control board, and the power supply interface is configured to supply, through an external power supply, power to the control board in which the power supply interface is located when the power supply interface is connected to the external power supply. It may be understood that, an independent power supply interface is disposed on each of the first control board and the second control board, which supports independent power supply operation of a single control board without a bus backplane board. This can effectively reduce costs of the electric power measurement and control device 2 and reduce a size of the electric power measurement and control device 2.

Optionally, a power supply board interface may be further disposed on each of the first control board and the second control board. The power supply board interface is configured to supply, through a power supply board, power to the control board in which the power supply board interface is located when power supply board interface is connected to the power supply board. When a power supply is disposed on the bus backplane board, the power supply board is the bus backplane board. A plurality of power output interfaces are further disposed on the bus backplane board, and the power output interface is configured to supply power to a board other than the bus backplane board. When no power supply is disposed on the bus backplane board, the electric power measurement and control device 2 further includes a power supply board. The power supply board is configured to supply power to the entire electric power measurement and control device 2. Two input ports are disposed on the power supply board, and the two input ports respectively support an alternating current input and a direct current input. In addition, a plurality of power output interfaces are further disposed on the power supply board, and the power output interface is configured to supply power to a board other than the power supply board. It may be understood that, in addition to being powered by the external power supply located outside the electric power measurement and control device 2, a board in the electric power measurement and control device 2 may further be powered by the power supply board inside the electric power measurement and control device 2. A power supply manner of the board is diversified and flexible.

A fault alarm output interface and a signal input interface are disposed on each of the first control board and the second control board. The power generation system 1 further includes a redundancy device of the electric power measurement and control device 2. A circuit structure and a function of the redundancy device of the electric power measurement and control device 2 are the same as those of the electric power measurement and control device 2. A signal input interface is disposed on the redundancy device of the electric power measurement and control device 2. The fault alarm output interface on any one of the first control board and the second control board is configured to output a first alarm signal to the redundancy device of the electric power measurement and control device 2 in the power generation system 1 when the electric power measurement and control device 2 is faulty or powered off. When the signal input interface of the redundancy device of the electric power measurement and control device 2 receives the first alarm signal, the redundancy device of the electric power measurement and control device 2 sends a first control signal to the n power conversion devices and the switch device 3 based on obtained electrical data of a point of coupling G, or sends a third control signal to the n power conversion devices and the switch device 3 based on a received second control signal, or performs logic control or AI control on the n power conversion devices and the switch device 3 based on obtained electrical data of the n power conversion devices, obtained electrical data of the switch device 3, and obtained electrical data of a point of coupling G. Herein, the electric power measurement and control device 2 is a primary device, and the redundancy device of the electric power measurement and control device 2 is a secondary device. Correspondingly, the signal input interface on any one of the first control board and the second control board is configured to receive a second alarm signal sent when the redundancy device of the electric power measurement and control device 2 is faulty or powered off. When the signal input interface of the electric power measurement and control device 2 receives the second alarm signal, the electric power measurement and control device 2 sends a first control signal to the n power conversion devices and the switch device 3 based on the obtained electrical data of the point of coupling G, or sends a third control signal to the n power conversion devices and the switch device 3 based on the received second control signal, or performs logic control or AI control on the n power conversion devices and the switch device 3 based on the obtained electrical data of the n power conversion devices, the obtained electrical data of the switch device 3, and the obtained electrical data of the point of coupling G. Herein, the electric power measurement and control device 2 is a secondary device, and the redundancy device of the electric power measurement and control device 2 is a primary device. It may be understood that, the fault alarm output interface and the signal input interface are disposed on the control board, so that the redundancy device of the electric power measurement and control device can take over work of the electric power measurement and control in time when the electric power measurement and control device is faulty or powered off. This improves stability of the power generation system 1. For example, the fault alarm output interface provided in this application may be a normally closed DO, the first alarm signal and the second alarm signal may be voltage signals or current signals, and the signal input interface is a DI. Herein, a quantity of fault alarm output interfaces and a quantity of signal input interfaces on each of the first control board and the second control board are not limited in this application. It may be understood that the fault alarm output interface and the signal input interface are disposed on each of the two control boards, so that an independent board can also maintain good fault detection and signal collection functions.

In addition, based on the fault alarm output interface and the signal input interface disposed on each of the two control boards, a single control board can also support redundancy, and meet requirements of small-sized installation and low-cost and high-performance redundancy. The following provides description in a sequence of describing a diagram of structures of the two control boards before describing diagrams of redundancy structures of the two control boards.

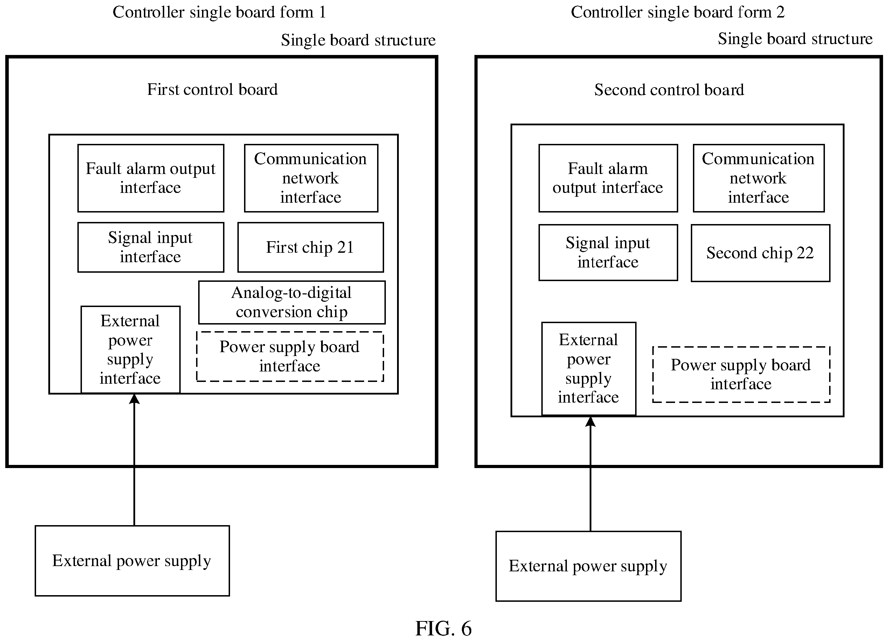

For example, refer to FIG. 6. FIG. 6 is a diagram of a structure of a single control board according to this application. As shown in FIG. 6, a second chip 22, a fault alarm output interface, a signal input interface, a communication interface, and a power supply interface are disposed on a second control board, and a first chip 21, a fault alarm output interface, a signal input interface, a communication interface, a power supply interface, and an analog-to-digital conversion chip are disposed on a first control board. Optionally, a power supply board interface may be disposed on each of the first control board and the second control board. Herein, any one of the first control board and the second control board may form a separate controller. For functions of various interfaces and various chips disposed on the two control boards, refer to descriptions of corresponding parts in the foregoing embodiments. Details are not described herein again.

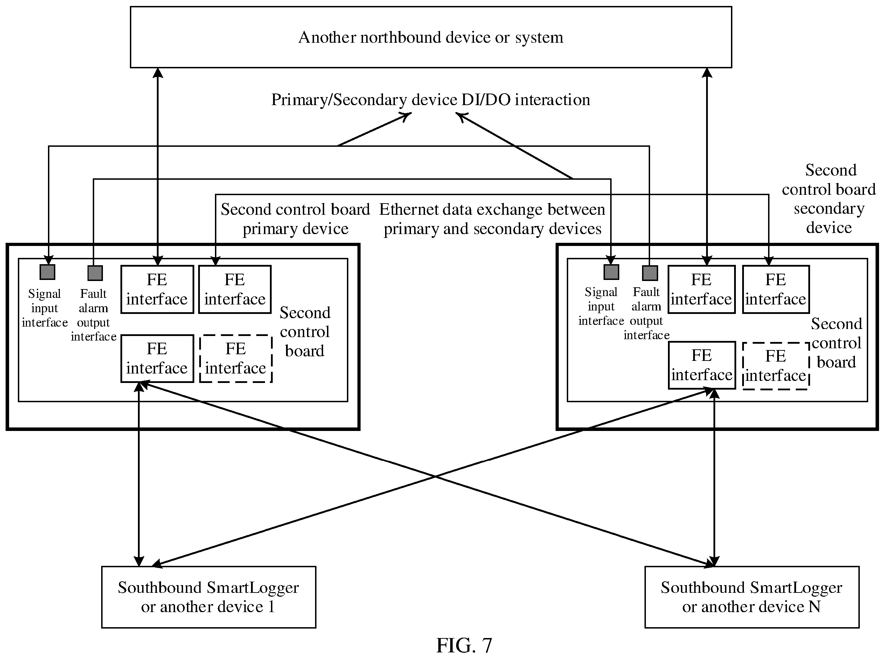

For example, refer to FIG. 7. FIG. 7 is a diagram of a redundancy structure of a single control board according to this application. As shown in FIG. 7, two second control boards are respectively located on a first control board primary device and a first control board secondary device. A signal input interface, a fault alarm output interface, and at least three network communication interfaces are disposed on a second control board in the second control board primary device, and the at least three network communication interfaces correspond to at least three fast Ethernet (Fast Ethernet, FE) interfaces in FIG. 7. For example, three FE interfaces are respectively configured to support communication between the second control board primary device and the second control board secondary device, support communication between the second control board primary device and another northbound device or system, and support communication between the second control board primary device and a southbound SmartLogger or another device.

A signal input interface, a fault alarm output interface, and at least three network communication interfaces are disposed on a second control board in the second control board secondary device, and the at least three network communication interfaces correspond to at least three fast Ethernet (Fast Ethernet, FE) interfaces in FIG. 7. For example, three FE interfaces are respectively configured to support communication between the second control board secondary device and the second control board primary device, support communication between the second control board secondary device and the another northbound device or system, and support communication between the second control board secondary device and the southbound SmartLogger or another device.

The signal input interface of the second control board secondary device is connected to the fault alarm output interface of the second control board primary device, and the fault alarm output interface of the second control board secondary device is connected to the signal input interface of the second control board primary device.

After the second control board primary device works, the second control board primary device starts to obtain electrical data of each southbound SmartLogger or another device, and performs logic control or AI control on each southbound SmartLogger or another device based on the electrical data of each southbound SmartLogger or another device. After the second control board secondary device works, the second control board secondary device starts to obtain the electrical data of each southbound SmartLogger or another device. When the second control board primary device is faulty or powered off, the second control board primary device outputs a first alarm signal to the signal input interface on the second control board secondary device through the fault alarm output interface on the second control board primary device. When the signal input interface on the second control board secondary device receives the first alarm signal, the second control board secondary device performs logic control or AI control on each southbound SmartLogger or another device based on the obtained electrical data of each southbound SmartLogger or another device, to take over work of the first control board primary device. Herein, primary/secondary identities of the second control board primary device and the second control board secondary device may be switched. A specific implementation in which the second control board primary device replaces the second control board secondary device when the second control board secondary device is faulty or powered off is not described herein in detail. It can be further learned that a single second control board can also support redundancy, and meet requirements of small-sized installation and low-cost and high-performance redundancy.

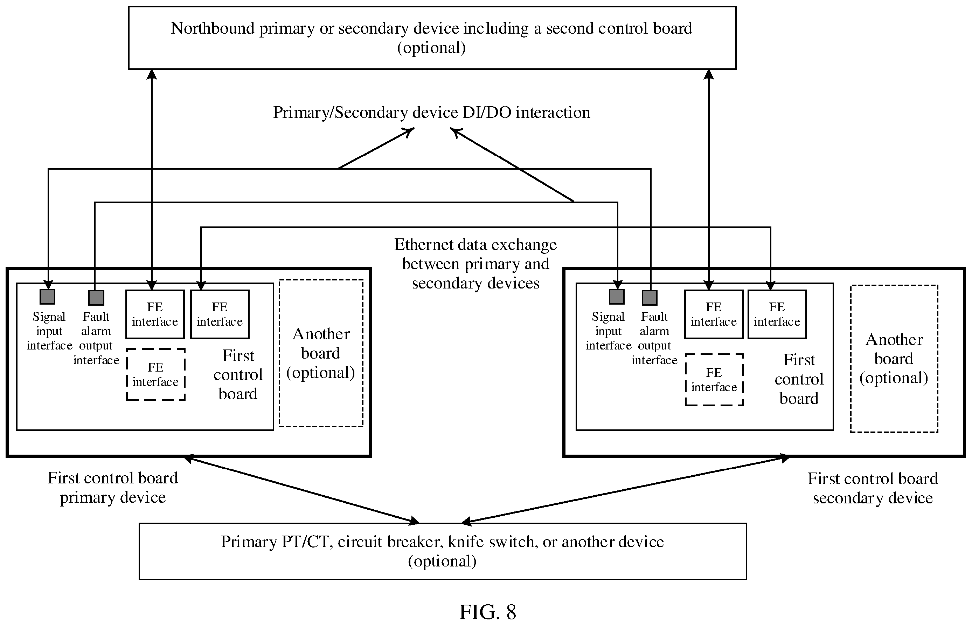

For example, refer to FIG. 8. FIG. 8 is a diagram of another redundancy structure of a single control board according to this application. As shown in FIG. 8, two first control boards are respectively located on a first control board primary device and a first control board secondary device. A signal input interface, a fault alarm output interface, and at least two communication interfaces are disposed on a first control board in the first control board primary device, and the at least two communication interfaces correspond to at least two FE interfaces in FIG. 8. For example, two FE interfaces are respectively configured to support communication between the first control board primary device and the first control board secondary device, and support communication between the first control board primary device and a northbound primary or secondary device including a second control board.

A signal input interface, a fault alarm output interface, and at least two communication interfaces are disposed on a first control board in the first control board secondary device, and the at least two communication interfaces correspond to at least two FE interfaces in FIG. 8. For example, two FE interfaces are respectively configured to support communication between the first control board secondary device and the first control board primary device, and support communication between the first control board secondary device and the northbound primary device or secondary device including the second control board.

The signal input interface on the first control board secondary device is connected to the fault alarm output interface on the first control board primary device, and the fault alarm output interface on the first control board secondary device is connected to the signal input interface of the first control board primary device.

After the first control board primary device works, the first control board primary device starts to collect electrical data of an electrical node (for example, a point of coupling), and sends a first control signal to the primary PT, the primary CT, the circuit breaker, the knife switch, or another device based on the electrical data of the electrical node, to control a working status of the primary PT, the primary CT, the circuit breaker, the knife switch, or the another device. The primary PT is a device connected to a primary side of a voltage transformer, and the primary CT is a device connected to a primary side of a current transformer. After the first control board secondary device works, the first control board secondary device starts to collect the electrical data of the electrical node.

When the first control board primary device is faulty or powered off, the first control board primary device outputs a first alarm signal to the signal input interface on the first control board secondary device through the fault alarm output interface of the first control board primary device. When the signal input interface on the first control board secondary device receives the first alarm signal, the first control board secondary device sends the first control signal to the primary PT, the primary CT, the circuit breaker, the knife switch, or the another device based on the collected electrical data of the electrical node, to control the working status of the primary PT, the primary CT, the circuit breaker, the knife switch, or the another device, so as to take over work of the first control board primary device. Herein, primary/secondary identities of the second control board primary device and the second control board secondary device may be switched. A specific implementation in which the first control board secondary device is replaced when the first control board secondary device is faulty or powered off is not described herein in detail. It can be further learned that a single first control board can also support redundancy, and meet requirements of small-sized installation and low-cost and high-performance redundancy.

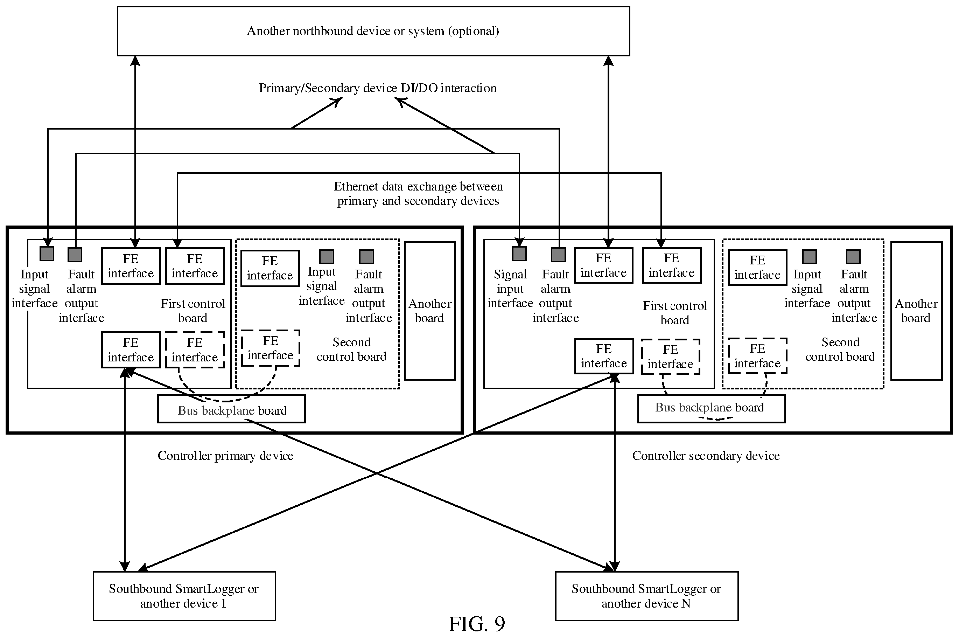

For example, refer to FIG. 9. FIG. 9 is a diagram of a redundancy structure of a dual control board according to this application. As shown in FIG. 9, each of a controller primary device and a controller secondary device includes a first control board, a second control board, and a bus backplane board. A signal input interface, a fault alarm output interface, and at least three communication interfaces are disposed on a first control board in the controller primary device, and the at least three communication interfaces correspond to at least three FE interfaces in FIG. 9. For example, three FE interfaces on the first control board are configured to support communication between the first control board in the controller primary device and a first control board in the controller secondary device, support communication between the first control board in the controller primary device and another northbound device or system, support communication between the first control board in the controller primary device and a southbound SmartLogger or another device, and support communication between the first control board in the controller primary device and a second control board in the controller primary device. A signal input interface, a fault alarm output interface, and at least one communication interface are disposed on the second control board in the controller primary device, and the at least one communication interface corresponds to at least one FE interface in FIG. 9. For example, one FE interface on the second control board is used to control communication between the second control board in the controller primary device and the first control board in the controller primary device. A communication soft bus capable of multi-link instantiation that includes two or more Ethernet communication protocols: GOOSE/UDP and TCP is disposed on a bus backplane board in the controller primary device, and is configured to support communication between the first control board in the controller primary device and the second control board in the controller primary device.

A signal input interface, a fault alarm output interface, and at least three communication interfaces are disposed on the first control board in the controller secondary device, and the at least three communication interfaces correspond to at least three FE interfaces in FIG. 9. For example, three FE interfaces are configured to support communication between the first control board in the controller secondary device and the first control board in the controller primary device, support communication between the first control board in the controller secondary device and the another northbound device or system, support communication between the first control board in the controller secondary device and the southbound SmartLogger or the another device, and support communication between the first control board in the controller secondary device and a second control board in the controller secondary device. A signal input interface, a fault alarm output interface, and at least one communication interface are disposed on the second control board in the controller secondary device, and the at least one communication interface corresponds to at least one FE interface in FIG. 9. For example, one FE interface on the second control board is used to control communication between the second control board in the controller secondary device and the first control board in the controller secondary device. A communication soft bus capable of multi-link instantiation that includes the two or more Ethernet communication protocols: GOOSE/UDP and TCP is disposed on a bus backplane board in the controller secondary device, and is configured to support communication between the first control board in the controller secondary device and the second control board in the controller secondary device.

The signal input interface on the first control board in the controller secondary device is connected to the fault alarm output interface on the first control board in the controller primary device, and the fault alarm output interface on the first control board in the controller secondary device is connected to the signal input interface on the first control board in the controller primary device.

After the controller primary device works, the first control board in the controller primary device starts to collect electrical data of an electrical node, and sends a first control signal to the southbound SmartLogger or the another device based on the electrical data of the electrical node, to control a working status of the southbound SmartLogger or the another device. The second control board in the controller primary device starts to obtain electrical data of each southbound SmartLogger or another device, and performs logic control or AI control on each southbound SmartLogger or the another device based on the electrical data of each southbound SmartLogger or the another device. After the controller secondary device works, the first control board in the controller secondary device starts to collect the electrical data of the electrical node, and the second control board in the controller secondary device starts to obtain electrical data of each southbound SmartLogger or the another device.

When the first control board in the controller primary device is faulty or powered off, the controller primary device outputs a first alarm signal to the signal input interface on the first control board in the controller secondary device through the fault alarm output interface in the controller primary device. When the signal input interface on the first control board in the controller secondary device receives the first alarm signal, the first control board sends the first control signal to the southbound SmartLogger or the another device based on the collected electrical data of the electrical node, to control the working status of the southbound SmartLogger or the another device, so as to take over work of the first control board in the controller primary device. Herein, primary/secondary identities of the first control board in the controller primary device and the first control board in the controller secondary device may be switched. A specific implementation in which the first control board in the controller primary device replaces the first control board in the controller secondary device when the first control board in the controller secondary device is faulty or powered off is not described herein in detail.

The signal input interface on the second control board in the controller secondary device is connected to the fault alarm output interface on the second control board in the controller primary device, and the fault alarm output interface on the second control board in the controller secondary device is connected to the signal input interface on the second control board in the controller primary device. When the second control board in the controller primary device is faulty or powered off, the controller primary device outputs a first alarm signal to the signal input interface on the second control board in the controller secondary device through the fault alarm output interface in the controller primary device. When receiving the first alarm signal, the second control board in the controller secondary device performs logic control or AI control on each southbound SmartLogger or the another device based on the obtained electrical data of each southbound SmartLogger or the another device, to take over work of the second control board in the controller primary device. Herein, primary/secondary identities of the second control board in the controller primary device and the second control board in the controller secondary device may be switched. A specific implementation in which the second control board in the controller primary device replaces the second control board in the controller secondary device when the second control board in the controller secondary device is faulty or powered off is not described herein in detail. It may be understood that, in a conventional solution, EMS redundancy and controller redundancy respectively implement redundancy at two ends, which is costly and a communication control solution is complex. However, in this embodiment of this application, the power generation system can implement redundancy that can be implemented only by two solutions at two levels in the conventional solution through two controller device modules. This greatly reduces redundancy costs, reduces complexity of a redundancy solution, and also reduces installation costs required by the redundancy solution.

In conclusion, the embodiment shown in FIG. 7 is a dual second control board redundancy solution, the embodiment shown in FIG. 8 is a dual first control board redundancy solution, and the embodiment shown in FIG. 9 is an entire system redundancy solution. The redundancy solution provided in this application is diversified and has high flexibility. In addition, the control boards in this application interact with output and input through the fault alarm output interface and the signal input interface. This can implement high-reliability fault detection and high-speed switching. Compared with a pure data communication manner, this manner has higher reliability and better switching performance.

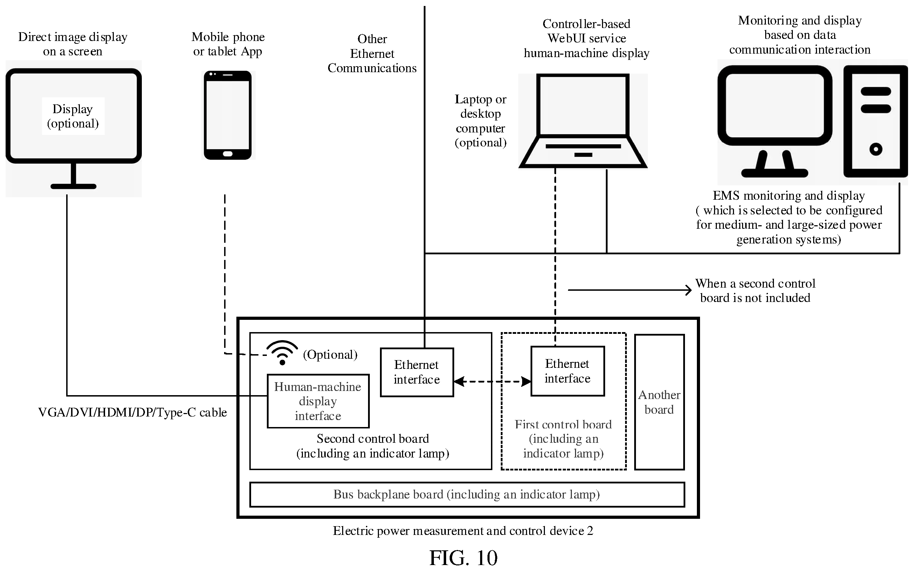

In addition, a human-machine display interface is further disposed on at least one of the first control board and the second control board shown in FIG. 4. For ease of description, the following describes a human-machine display interface function provided by the electric power measurement and control device 2 with reference to a diagram of a structure of an electric power measurement and control device shown in FIG. 10 by using an example in which a human-machine display interface is disposed on the first control board, a communication chip on the first control board is a Wi-Fi chip, and communication interfaces on the first control board and the second control board are Ethernet interfaces.

As shown in FIG. 10, an indicator lamp is disposed on each of a first control board, a second control board, and a bus backplane board. A customer has no requirement for running display for a power generation system 1 with a small capacity. The electric power measurement and control device 2 only provides indicator lamp display, and a device status can be determined based on the indicator lamp of the device.

A Wi-Fi chip or an Ethernet interface is further disposed on the second control board. The second control board provides a web service human-machine display interface HTTP protocol through the Ethernet interface, and supports an image and human-machine operation interface service based on common internet browser software on an external laptop or computer workstation. The second control board further supports, by selecting to configure a Wi-Fi chip, an app application image or a human-machine interface service of a wireless-communication-based mobile phone or tablet device. When the customer does not have a high requirement for running display, the electric power measurement and control device 2 may establish a wireless communication connection with a mobile phone or tablet App through the Wi-Fi chip, or establish a communication connection with a laptop or desktop computer through the Ethernet interface. During initial deployment of a project, the project can be put into operation and customized parameter configuration can be completed via a common browser through a mobile phone, tablet App, or laptop or desktop computer WebUI service. After the project is put into operation, the laptop can be removed and a connection operation can be carried out if necessary. No additional human-machine display cost is required.

A human-machine display interface is further disposed on the second control board, and a type of the human-machine display interface may be one or a combination of a VGA interface, a DVI interface, an HDMI interface, a DP interface, and a Type-C interface, and plug-in software provides a display data protocol of a corresponding interface. When the customer has a special requirement for liquid crystal display or another display requirement for the power generation system 1, the power generation system 1 may be configured with a liquid crystal display or another display. The electric power measurement and control device 2 may directly display the obtained data (for example, the electrical data of the point of coupling G, the electrical data of the n power conversion devices, and the electrical data of the switch device) on a display through the human-machine display interface.

In a medium-or large-sized power generation system, when a customer has a dedicated EMS or SCADA service requirement, the Ethernet interface on the second control board may be used to transmit Ethernet communication data. Communication display is performed independently by selecting to configure an EMS monitoring and display device in the power generation system.

When there is no second control board in the electric power measurement and control device 2, an Ethernet interface may also be configured on the first control board. The second control board provides a web service human-machine display interface HTTP protocol through the Ethernet interface, and supports an image and human-machine operation interface service based on common internet browser software on an external laptop or computer workstation.

In actual application, failure rates of an indicator lamp display manner, a mobile phone App display manner, a tablet App display manner, and a WebUI display manner provided by the electric power measurement and control device 2 are much lower than a failure rate of a conventional liquid crystal display manner, and reliability is high. The mobile phone App display manner, the tablet App display manner, the WebUI display manner, and a display manner of the EMS monitoring and display device configured through selection that are provided by the electric power measurement and control device 2 are basically not limited by a distance, and are easy to use. A display manner of the human-machine display interface provided by the electric power measurement and control device 2 is suitable to select to configure a liquid crystal display for flexible expansion, to meet a high-end display requirement.

It may be understood that, based on an existing hardware interface on a controller, the electric power measurement and control device 2 may provide a plurality of forms of display and configuration operation human-machine services, such as a WebUI and Wi-Fi+App, to meet a display solution of a customer in different dimensions, different distances, and different costs. This improves display flexibility of the electric power measurement and control device 2, and reduces display costs.

Refer to FIG. 4 again. As shown in FIG. 4, the electric power measurement and control device 2 may further include an alternating current sampling board and an extended input/output interface board. At least three secondary voltage transformers, at least three secondary current transformers, and a current/voltage access terminal are disposed on the alternating current sampling board. The extended input/output port board provides one of a DI or DO port and an AI/AO port, or a combination extended port of two or more types of ports.

In this embodiment of this application, the electric power measurement and control device 2 separately integrates SCADA and EMS functions and an electric power measurement and control function on the internal second chip 22 and the internal first chip 21. In comparison with a dual control system in a power generation system in the conventional technology that has a large size, high system costs, and high complexity, a device size can be greatly reduced, and a large quantity of power supply circuits and auxiliary circuits can be saved. Therefore, the electric power measurement and control device 2 can effectively reduce costs and complexity of the power generation system. In addition, the second chip 22 and the first chip 21 are respectively placed on two independent peripheral circuit boards, to implement independent arrangement or combination of respective functions. This helps improve project implementation flexibility and reduce costs.

In this application, in addition to a case in which the first chip 21 and the second chip 22 are respectively disposed on the two control boards of the electric power measurement and control device 2, the first chip 21 and the second chip 22 may alternatively be disposed on a same control board of the electric power measurement and control device 2.

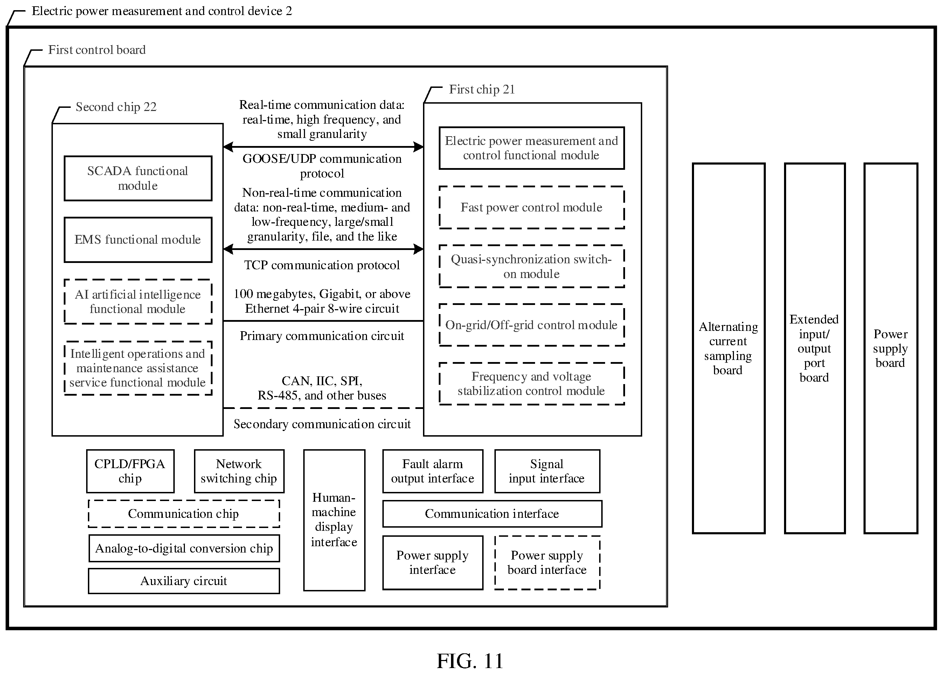

FIG. 11 is a diagram of another structure of an electric power measurement and control device according to this application. As shown in FIG. 11, both a second chip 22 and a first chip 21 are disposed on a first control board. Herein, for descriptions of the second chip 22 and the first chip 21, refer to descriptions of corresponding parts in the electric power measurement and control device 2 shown in FIG. 3. Details are not described herein again. Optionally, a CPLD/FPGA chip, a network switching chip, an analog-to-digital conversion chip, a communication chip, and an auxiliary circuit are further disposed on the first control board. Herein, for descriptions of the CPLD/FPGA chip, the network switching chip, the analog-to-digital conversion chip, the auxiliary circuit, and the communication chip, refer to descriptions of corresponding parts in the electric power measurement and control device 2 shown in FIG. 4. Details are not described herein again.

A communication interface is further disposed on the first control board. The first control board is configured to perform data transmission with a first device through the communication interface. The first device is a device in a power generation system 1 other than an electric power measurement and control device 2. In other words, the communication interface is configured to support communication between the first control board and the first device. For example, each communication interface on the first control board is an Ethernet interface, and the Ethernet interface provides a communication soft bus capable of multi-link instantiation that includes two or more Ethernet communication protocols: GOOSE/UDP and TCP. In addition, a communication network between the electric power measurement and control device 2 and an external device is the same as a communication network (for example, the Ethernet) between the two chips, to facilitate master-slave distributed expansion of the power generation system 1. This can effectively improve distributed expansion efficiency. Herein, there may be one or more communication interfaces on the first control board. This is not limited in this application.

A human-machine display interface is further disposed on the first control board, and the first chip 21 is configured to perform human-machine display on a display device through the human-machine display interface. Herein, for descriptions of the human-machine display interface and human-machine display performed by the first control board through a non-human-machine display interface, refer to descriptions of corresponding parts in FIG. 10. Details are not described herein again.

A power supply interface is further disposed on the first control board, and the power supply interface is configured to supply power to the first control board through an external power supply when the power supply interface is connected to the external power supply. Optionally, a power supply board interface may be further disposed on the first control board, and the power supply board interface is configured to supply power to the first control board through a power supply board when the power supply board interface is connected to the power supply board. Herein, for specific descriptions of the power supply interface and the power supply board interface, refer to descriptions of corresponding parts in the electric power measurement and control device 2 shown in FIG. 4. Details are not described herein again.

A fault alarm output interface and a signal input interface are further disposed on the first control board. The power generation system 1 further includes a redundancy device of the electric power measurement and control device 2, and the redundancy device is provided with a signal input interface. The fault alarm output interface on the first control board is configured to output a first alarm signal to the redundancy secondary device of the electric power measurement and control device 2 in the power generation system 1 when the electric power measurement and control device 2 is faulty or powered off. When the signal input interface of the redundancy device of the electric power measurement and control device 2 receives the first alarm signal, the redundancy device of the electric power measurement and control device 2 sends a first control signal to the n power conversion devices and the switch device 3 based on obtained electrical data of a point of coupling G, or sends a third control signal to the n power conversion devices and the switch device 3 based on a received second control signal, or performs logic control or AI control on the n power conversion devices and the switch device 3 based on obtained electrical data of the n power conversion devices, obtained electrical data of the switch device 3, and obtained electrical data of a point of coupling G. Herein, the electric power measurement and control device 2 is a primary device, and the redundancy device of the electric power measurement and control device 2 is a secondary device. Correspondingly, the signal input interface on the first control board is configured to receive a second alarm signal sent when the redundancy device of the electric power measurement and control device 2 is faulty or powered off. When a signal input interface of the electric power measurement and control device 2 receives the second alarm signal, the electric power measurement and control device 2 sends a first control signal to the n power conversion devices and the switch device 3 based on the obtained electrical data of the point of coupling G, or sends a third control signal to the n power conversion devices and the switch device 3 based on the received second control signal, or performs logic control or AI control on the n power conversion devices and the switch device 3 based on the obtained electrical data of the n power conversion devices, the obtained electrical data of the switch device 3, and the obtained electrical data of the point of coupling G. Herein, the electric power measurement and control device 2 is a secondary device, and the redundancy device of the electric power measurement and control device 2 is a primary device. It may be understood that, the fault alarm output interface and the signal input interface are disposed on the control board, so that the redundancy device of the electric power measurement and control device can take over work of the electric power measurement and control in time when the electric power measurement and control device is faulty or powered off. This improves stability of the power generation system 1. For example, the fault alarm output interface provided in this application may be a normally closed DO, the first alarm signal and the second alarm signal may be voltage signals or current signals, and the signal input interface is a DI. Herein, a quantity of fault alarm output interfaces and a quantity of signal input interfaces on the first control board are not limited in this application. It may be understood that the fault alarm output interface and the signal input interface are disposed on the first control board, so that an independent board can also maintain good fault detection and signal collection functions.

In addition, based on the fault alarm output interface and the signal input interface disposed on the first control board, the electric power measurement and control device 2 shown in FIG. 11 is applicable to the redundancy solution shown in FIG. 9, so that redundancy can also be supported, and requirements of small-sized installation and low-cost and high-performance redundancy can be met.

It should be noted that, the second chip 22 in the electric power measurement and control device 2 shown in FIG. 11 includes an AI artificial intelligence functional module, and the AI artificial intelligence functional module may further be independently located in a third chip that is in the electric power measurement and control device 2 and that is different from the second chip 22 and the first chip 21. The third chip may be located on the first control board together with the second chip 22 and the first chip 21, or may be located on a second control board that is in the electric power measurement and control device 2 and that is different from the first control board.

In this embodiment of this application, the electric power measurement and control device 2 separately integrates SCADA and EMS functions and an electric power measurement and control function on the internal second chip 22 and the internal first chip 21. In comparison with a dual control system in a power generation system in the conventional technology that has a large size, high system costs, and high complexity, a device size can be greatly reduced, and a large quantity of power supply circuits and auxiliary circuits can be saved. Therefore, the electric power measurement and control device 2 can effectively reduce costs and complexity of the power generation system. In addition, the second chip 22 and the first chip 21 are placed on a same independent peripheral circuit board, so that the second chip 22 and the first chip 21 may share some chips, interfaces, and circuits. This effectively reduces costs of the electric power measurement and control device 2 and reduces a volume of the electric power measurement and control device 2.

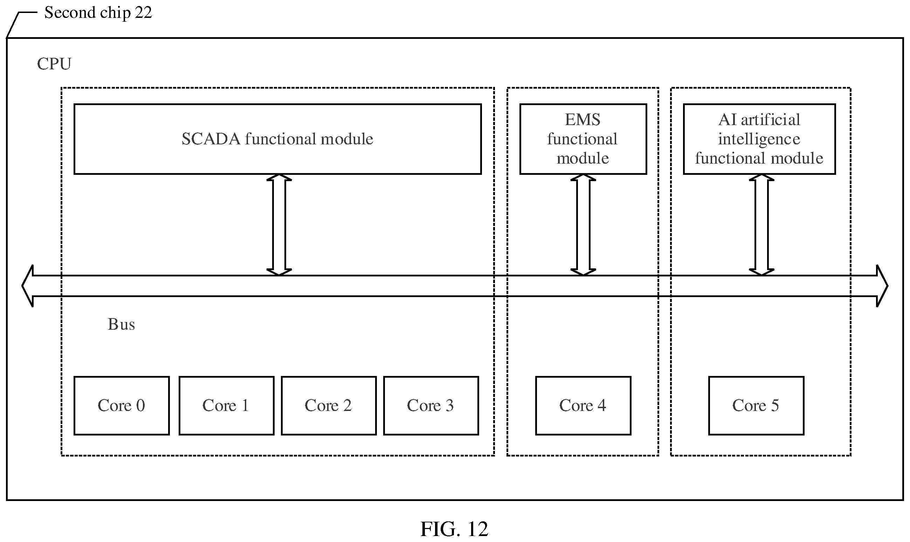

In addition, functional modules (that is, service feature components) such as a SCADA functional module, an EMS functional module, and the AI artificial intelligence functional module included in the second chip 22 provided in this application are independently deployed by using a microservice technology and a message bus technology. For details, refer to FIG. 12. FIG. 12 is a diagram of a structure of a second chip according to this application. As shown in FIG. 12, a processor CPU of the second chip 22 includes a SCADA functional module, an EMS functional module, an AI artificial intelligence functional module, a bus, and a multi-core (corresponding to a core 0 to a core 5 in FIG. 11). Functional modules such as the SCADA functional module, the EMS functional module, and the AI artificial intelligence functional module included in the processor CPU of the second chip 22 may be independently deployed by using a microservice technology and a message bus technology, and may be flexibly bound to a multi-core resource, to implement proper allocation and utilization of processor resources. The message bus technology may use multi-core communication implemented based on shared memory, or may use a socket-based communication technology. For example, the SCADA functional module communicates with the first chip 21 in an Ethernet communication manner of GOOSE and TCP, communicates with an external device in the same communication manner, and provides communication data for another northbound device or system. Based on a logic control technology or model predictive control (model predictive control, MPC) technology, the EMS functional module uses data obtained by the SCADA functional module as an input to make a control decision of the power generation system, and sends an instruction through the bus. The AI artificial intelligence functional module uses the data obtained by the SCADA functional module as an input, uses big data analysis, a deep learning technology, or a solver technology to implement an artificial intelligence service, including load prediction, energy generation prediction, energy storage estimation, or system status estimation, and outputs a related result to the EMS functional module for a more advanced and refined function.

It may be understood that, the SCADA functional module, the EMS functional module, and the AI artificial intelligence functional module in the second chip 22 are deployed based on a microservice architecture, so that resources such as a CPU and a memory can be saved and fully used, resource support of a required functional module can be improved, and cross impact of an unrelated module can be reduced. In addition, related modules are independently developed and deployed, and have low coupling with other modules. This can improve development and test efficiency.

It should be noted that the electric power measurement and control device 2 is described by using an example in which the SCADA and EMS functions and the electric power measurement and control function are respectively integrated into the internal second chip 22 and the internal first chip 21, that is, a plurality of CPUs are used as an example. The electric power measurement and control device 2 in this application is also applicable to a single-CPU multi-core solution.

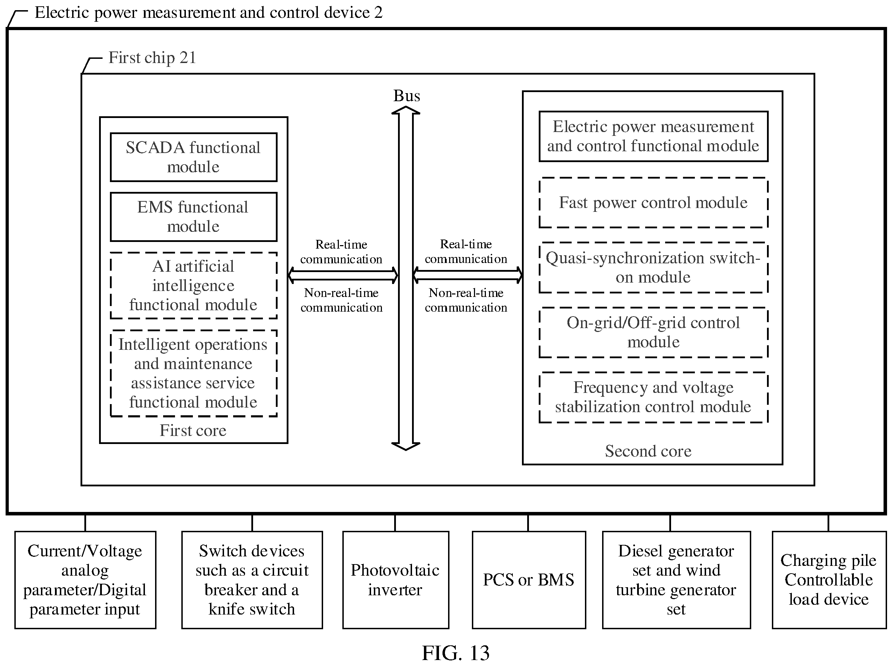

FIG. 13 is a diagram of another structure of an electric power measurement and control device according to this application. As shown in FIG. 13, the electric power measurement and control device 2 includes a first chip 21, and the first chip 21 includes a plurality of cores and a bus. Data is transmitted between the plurality of cores through the bus. The plurality of cores include a SCADA functional module, an EMS functional module, and an electric power measurement and control functional module. For example, the first chip 21 includes a first core and a second core, the first core includes the SCADA functional module and the EMS functional module, and the second core includes the electric power measurement and control functional module. Optionally, the first chip 21 includes a first core, a second core, and a third core, the first core includes the SCADA functional module, the second core includes the EMS functional module, and the third core includes the electric power measurement and control functional module.

The electric power measurement and control functional module is configured to: obtain electrical data of a point of coupling G, and send a first control signal to the n power conversion devices and the switch device 3 based on the electrical data of the point of coupling G. The electric power measurement and control functional module is further configured to send the electrical data of the point of coupling G to the SCADA functional module through the bus. The SCADA functional module is configured to: obtain electrical data of the n power conversion devices and electrical data of the switch device 3; receive the electrical data of the point of coupling G sent by the electric power measurement and control functional module; and send the electrical data of the n power conversion devices, the electrical data of the switch device 3, and the electrical data of the point of coupling G to the EMS functional module through the bus. The EMS functional module is configured to: generate a second control signal based on the electrical data of the n power conversion devices, the electrical data of the switch device 3, and the electrical data of the point of coupling G that are obtained by the SCADA functional module, and send the second control signal to the electric power measurement and control functional module through the bus. Specifically, the EMS functional module is configured to: perform, based on the electrical data of the n power conversion devices, the electrical data of the switch device 3, and the electrical data of the point of coupling G, logic control or AI control on the n power conversion devices and the switch device 3; and send, to the electric power measurement and control functional module through the bus, the second control signal generated based on the logic control or the AI control, that is, a logic control signal corresponding to the logic control or an AI control signal corresponding to the AI control. Alternatively, the EMS functional module is further configured to send the electrical data of the plurality of power conversion devices and the electrical data of the switch device to the electric power measurement and control functional module through the bus. The electric power measurement and control functional module is further configured to send a third control signal to the n power conversion devices and the switch device 3 based on the received electrical data of the n power conversion devices and the received electrical data of the switch device 3 that are sent by the EMS functional module through the bus, or the received second control signal that is sent by the EMS functional module through the bus. The bus may be a CAN, IIC, SPI, RS-485, or another private bus circuit.

Optionally, the first core further includes an AI artificial intelligence functional module or an intelligent operations and maintenance assistance service functional module. The second core may further include at least one of a fast power control module, a quasi-synchronization switch-on module, an on-grid/off-grid control module, and a frequency and voltage stabilization control module.

Herein, for specific descriptions of functional modules included in the first core and the second core, refer to descriptions of corresponding parts in the electric power measurement and control device 2 shown in FIG. 3. Details are not described herein again.

Data transmission between the plurality of cores includes real-time communication and non-real-time communication, and a communication frequency of the real-time communication is greater than a communication frequency of the non-real-time communication. For example, the real-time communication is communication in which a data transmission time interval is less than 10 ms (or 1s) and data is continuously transmitted, and the non-real-time communication is communication in which a data transmission time interval is greater than or equal to 10 ms (or 1s) and data is not continuously transmitted.

The electric power measurement and control device 2 may classify synchronous data into at least two types based on a data type, a granularity, and a communication frequency requirement of the synchronous data exchanged between the plurality of cores, for example, real-time communication data and non-real-time communication data. Herein, for specific descriptions of the real-time communication data, the non-real-time communication data, a multi-core real-time communication application scenario, and a multi-core non-real-time communication application scenario, refer to descriptions of corresponding parts in the electric power measurement and control device 2 shown in FIG. 3. Details are not described herein again.

In this embodiment of this application, the electric power measurement and control device 2 separately integrates SCADA and EMS functions and an electric power measurement and control function on different cores of the same chip. In comparison with a dual control system in a power generation system in the conventional technology that has a large size, high system costs, and high complexity, a device size can be greatly reduced, and a large quantity of power supply circuits and auxiliary circuits can be saved. Therefore, the electric power measurement and control device 2 can effectively reduce costs and complexity of the power generation system 1.

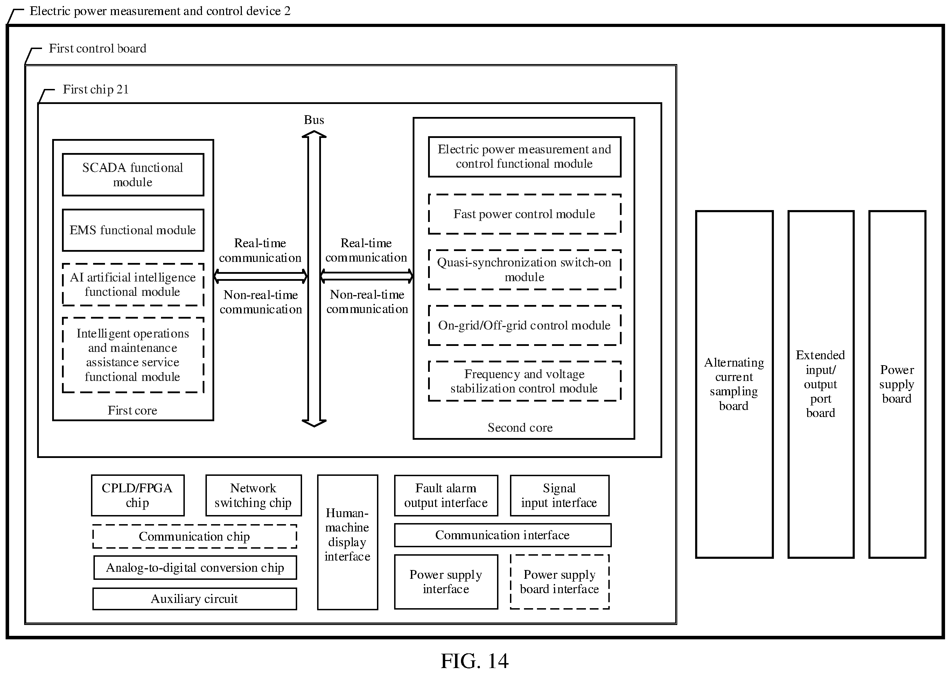

The electric power measurement and control device 2 includes at least one control board. For example, the at least one control board includes a first control board, and the first chip 21 is installed on the first control board. For details, refer to an electric power measurement and control device shown in FIG. 14. As shown in FIG. 14, a CPLD/FPGA chip, a network switching chip, an auxiliary circuit, an analog-to-digital conversion chip, a communication chip, a fault alarm output interface, a signal input interface, a communication interface, and a power supply interface may be further disposed on the first control board. Optionally, a communication chip and a power supply board interface may be further disposed on the first control board. Herein, for descriptions of the CPLD/FPGA chip, the network switching chip, the analog-to-digital conversion chip, the auxiliary circuit, the communication chip, the fault alarm output interface, the signal input interface, and the power supply interface, refer to descriptions of corresponding parts in the electric power measurement and control device 2 shown in FIG. 4. Details are not described herein again.

The first control board is configured to perform data transmission with a first device through the communication interface, and the first device is a device in a power generation system 1 other than the electric power measurement and control device 2. For example, the communication interface is an Ethernet interface, and the Ethernet interface provides a communication soft bus capable of multi-link instantiation that includes two or more Ethernet communication protocols: GOOSE/UDP and TCP. Herein, there may be one or more communication interfaces on the first control board. This is not limited in this application.

A human-machine display interface is further disposed on the first control board, and the first chip 21 is configured to perform human-machine display on a display device through the human-machine display interface. Herein, for descriptions of the human-machine display interface and human-machine display performed by the first control board through a non-human-machine display interface, refer to descriptions of corresponding parts in FIG. 10. Details are not described herein again.

The electric power measurement and control device 2 may further include a power supply board, an alternating current sampling board, and an extended input/output interface board. Herein, for descriptions of the power supply board, the alternating current sampling board, and the extended input/output interface board, refer to descriptions of corresponding parts in the electric power measurement and control device 2 shown in FIG. 4. Details are not described herein again.

In this embodiment of this application, the electric power measurement and control device 2 separately integrates SCADA and EMS functions and an electric power measurement and control function on different cores of the same chip. In comparison with a dual control system in a power generation system in the conventional technology that has a large size, high system costs, and high complexity, a device size can be greatly reduced, and a large quantity of power supply circuits and auxiliary circuits can be saved. Therefore, the electric power measurement and control device 2 can effectively reduce costs and complexity of the power generation system 1.

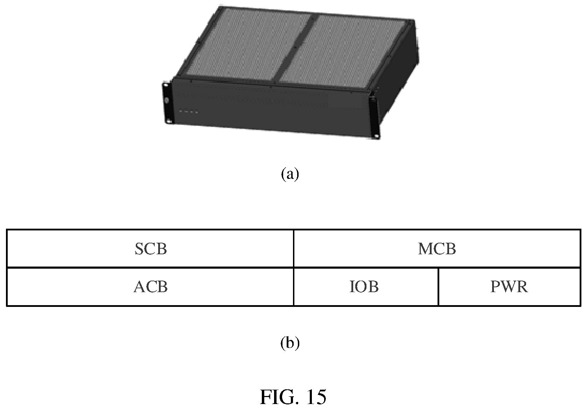

In addition, the electric power measurement and control device 2 provided in this application is usually installed in a power distribution cabinet or an electric power standard shielding cabinet. A chassis structure of the electric power measurement and control device 2 has no fan, a protection level is not less than IP20, and an operating temperature range is not less than -25°C to +55°C. In addition, the electric power measurement and control device 2 meets safety and electromagnetic compatibility (Electromagnetic Compatibility, EMC) requirements of an electric power measurement and control device in the industry. In addition, a chassis and a plug-in mechanical part of the electric power measurement and control device 2 provide board installation, heat dissipation, and indication display, and container space installed externally may be a flat insertion structure or a vertical insertion structure. For example, refer to FIG. 15. FIG. 15 is a diagram of still another structure of an electric power measurement and control device according to this application. As shown in FIG. 15, (a) in FIG. 15 is a diagram of a device front side of the electric power measurement and control device 2, and (b) in FIG. 15 is a diagram of a device rear side of the electric power measurement and control device 2. It can be learned from (b) in FIG. 15 that the electric power measurement and control device includes an MCB, an SCB, an ACB, an IOB, and a PWR. The SCB corresponds to the first control board in the electric power measurement and control device 2 shown in FIG. 4, the MCB corresponds to the second control board in the electric power measurement and control device 2 shown in FIG. 4, the ACB corresponds to the alternating current sampling board in the electric power measurement and control device 2 shown in FIG. 4, the IOB corresponds to the extended input/output port board in the electric power measurement and control device 2 shown in FIG. 4, and the PWR corresponds to the power supply board in the electric power measurement and control device 2 shown in FIG. 4.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electric power measurement and control device, wherein the electric power measurement and control device is used in a power generation system, the power generation system comprises a plurality of power conversion devices and a switch device, the switch device is configured to control connection and disconnection between the plurality of power conversion devices and a power grid, output ends of the plurality of power conversion devices are configured to connect to the power grid via a point of coupling, and the electric power measurement and control device comprises a first chip and a second chip, wherein
the first chip comprises an electric power measurement and control functional module, and the electric power measurement and control functional module is configured to: obtain electrical data of the point of coupling, and send a first control signal to the plurality of power conversion devices and the switch device based on the electrical data of the point of coupling;
the first chip is further configured to send the electrical data of the point of coupling to the second chip through a communication interface;
the second chip comprises a supervisory control and data acquisition (SCADA, Supervisory Control and Data Acquisition) and energy management system (EMS, Energy Management System) functional module, and the SCADA and EMS functional module is configured to: obtain electrical data of the plurality of power conversion devices and electrical data of the switch device, and generate a second control signal based on the electrical data of the plurality of power conversion devices, the electrical data of the switch device, and the electrical data of the point of coupling; and the second chip is further configured to send the second control signal to the first chip through the communication interface, or the second chip is further configured to send the electrical data of the plurality of power conversion devices and the electrical data of the switch device to the first chip through the communication interface; and
the electric power measurement and control functional module is further configured to send a third control signal to the plurality of power conversion devices and the switch device based on the received electrical data of the plurality of power conversion devices and the received electrical data of the switch device that are sent by the second chip through the communication interface, or the received second control signal that is sent by the second chip through the communication interface.

2. The electric power measurement and control device according to claim 1, wherein data transmission between the first chip and the second chip comprises real-time communication and non-real-time communication, and a data transmission frequency of the real-time communication is greater than a data transmission frequency of the non-real-time communication.

3. The electric power measurement and control device according to claim 1 or 2, wherein the electric power measurement and control device comprises at least one control board; and the first chip and the second chip are installed on a same control board, or the first chip and the second chip are installed on different control boards.

4. The electric power measurement and control device according to claim 3, wherein a power supply interface is disposed on the control board, and the power supply interface is configured to connect to a power supply.

5. The electric power measurement and control device according to claim 3 or 4, wherein the electric power measurement and control device further comprises a power supply board, a power supply board interface is disposed on the control board, and the power supply board interface is configured to supply power to the control board through the power supply board when the power supply board interface is connected to the power supply board.

6. The electric power measurement and control device according to any one of claims 3 to 5, wherein the communication interface is disposed on the control board, the control board is configured to perform data transmission with a first device through the communication interface, and the first device is a device in the power generation system other than the electric power measurement and control device.

7. The electric power measurement and control device according to any one of claims 3 to 6, wherein a human-machine display interface is further disposed on the control board, and the second chip is configured to display the electrical data of the plurality of power conversion devices, the electrical data of the switch device, and the electrical data of the point of coupling on a display device through the human-machine display interface.

8. The electric power measurement and control device according to any one of claims 1 to 7, wherein a communication network between the first chip and the second chip is the same as a communication network between the electric power measurement and control device and a device in the power generation system other than the electric power measurement and control device.

9. The electric power measurement and control device according to claim 6, wherein the communication interface comprises an Ethernet interface.

10. The electric power measurement and control device according to any one of claims 1 to 9, wherein the second control signal comprises a control signal generated by the SCADA and EMS functional module for performing logic control or artificial intelligence (Artificial Intelligence, AI) control on the plurality of power conversion devices and the switch device; the logic control comprises preset startup policy control, preset shutdown policy control, preset active power decomposition delivery policy control, preset reactive power decomposition delivery policy control, and preset frequency and voltage stabilization policy control for the power conversion device, point of coupling switch on/off control, or power adjustment control for a single power conversion device; and the AI control comprises rated power capacity prediction control, energy yield prediction control, or device service life prediction control for the power conversion device.

11. The electric power measurement and control device according to any one of claims 1 to 10, wherein the power conversion device is a photovoltaic inverter; and
the SCADA and EMS functional module is configured to: obtain the electrical data of the plurality of photovoltaic inverters, the electrical data of the switch device, and electrical data of the power generation system, and generate the second control signal based on the electrical data of the plurality of photovoltaic inverters, the electrical data of the switch device, the electrical data of the point of coupling, and the electrical data of the power generation system.

12. The electric power measurement and control device according to claim 11, wherein real-time communication data comprises the electrical data of the point of coupling, and non-real-time communication data comprises the electrical data of the power generation system and the electrical data of the photovoltaic inverters.

13. The electric power measurement and control device according to claim 11 or 12, wherein the electrical data of the point of coupling comprises a current, a voltage, or a power of the point of coupling, the electrical data of the power generation system comprises a system capacity or a primary rated value and a secondary rated value of a point of coupling measurement transformer, and electrical data of the photovoltaic inverter comprises a rated voltage, a rated current, a rated power, or a configuration file of the photovoltaic inverter.

14. The electric power measurement and control device according to any one of claims 1 to 10, wherein the power conversion device is a power conversion system, the power generation system further comprises an energy storage battery, and the energy storage battery is connected to an input end of the power conversion system; and
the SCADA and EMS functional module is configured to: obtain the electrical data of the plurality of power conversion systems, the electrical data of the switch device, and electrical data of the energy storage battery, and generate the second control signal based on the electrical data of the plurality of power conversion systems, the electrical data of the switch device, the electrical data of the point of coupling, and the electrical data of the energy storage battery.

15. The electric power measurement and control device according to claim 14, wherein the electrical data of the energy storage battery comprises a current, a voltage, a charge/discharge power, a charge/discharge state, a battery temperature, a remaining battery capacity, a battery state of health, an accumulated battery charge capacity, or an accumulated battery discharge capacity of the energy storage battery, the electrical data of the point of coupling comprises a current, a voltage, or a power of the point of coupling, and electrical data of the power conversion system comprises a rated voltage, a rated current, a rated power, or a configuration file of the power conversion system; and
real-time communication data comprises the charge/discharge power or the charge/discharge state of the energy storage battery, and the current, the voltage, or the power of the point of coupling; and non-real-time communication data comprises the current, the voltage, the battery temperature, the remaining battery capacity, the battery state of health, the accumulated battery charge capacity, or the accumulated battery discharge capacity of the energy storage battery, and the rated voltage, the rated current, the rated power, or the configuration file of the power conversion system.

16. The electric power measurement and control device according to any one of claims 1 to 10, wherein the power conversion device is a generator set, and the output ends of the plurality of generator sets are further configured to connect to a load device; and
the SCADA and EMS functional module is configured to: obtain the electrical data of the plurality of generator sets, the electrical data of the switch device, and electrical data of the load device, and generate the second control signal based on the electrical data of the plurality of generator sets, the electrical data of the switch device, the electrical data of the point of coupling, and the electrical data of the load device.

17. The electric power measurement and control device according to claim 16, wherein electrical data of the generator set comprises an output current, an output voltage, a rated power capacity, a power generation status, an available power, or a maximum power of the generator set, the electrical data of the load device comprises a device status, a current power, a maximum power, or a minimum power of the load device, the electrical data of the point of coupling comprises a current, a voltage, or a power of the point of coupling, and the electrical data of the generator set comprises a rated voltage, a rated current, a rated power, or a configuration file of the generator set; and
real-time communication data comprises the rated power capacity or the power generation status of the generator set, the device status or the current power of the load device, and the current, the voltage, or the power of the point of coupling; and non-real-time communication data comprises the output current, the output voltage, the available power, the maximum power, or a total energy yield of the generator set, the maximum power, the minimum power, or total energy consumption of the load device, and the rated voltage, the rated current, the rated power, or the configuration file of the generator set.

18. An electric power measurement and control device, wherein the electric power measurement and control device is used in a power generation system, the power generation system comprises a plurality of power conversion devices and a switch device, the switch device is configured to control connection and disconnection between the plurality of power conversion devices and a power grid, output ends of the plurality of power conversion devices are configured to connect to the power grid via a point of coupling, the electric power measurement and control device comprises a first chip, the first chip comprises a plurality of cores and a bus, and the plurality of cores comprise a SCADA functional module, an EMS functional module, and an electric power measurement and control functional module, wherein
the electric power measurement and control functional module is configured to: obtain electrical data of the point of coupling, and send a first control signal to the plurality of power conversion devices and the switch device based on the electrical data of the point of coupling;
the electric power measurement and control functional module is further configured to send the electrical data of the point of coupling to the SCADA functional module through the bus;
the SCADA functional module is configured to obtain electrical data of the plurality of power conversion devices and electrical data of the switch device;
the EMS functional module is configured to generate a second control signal based on the electrical data of the plurality of power conversion devices, the electrical data of the switch device, and the electrical data of the point of coupling that are obtained by the SCADA functional module; and the EMS functional module is further configured to send the second control signal to the electric power measurement and control functional module through the bus, or the EMS functional module is further configured to send the electrical data of the plurality of power conversion devices and the electrical data of the switch device to the electric power measurement and control functional module through the bus; and
the electric power measurement and control functional module is further configured to send a third control signal to the plurality of power conversion devices and the switch device based on the received electrical data of the plurality of power conversion devices and the received electrical data of the switch device that are sent by the EMS functional module through the bus, or the received second control signal that is sent by the EMS functional module through the bus.

19. The electric power measurement and control device according to claim 18, wherein data transmission between the plurality of cores comprises real-time communication and non-real-time communication, and a data transmission frequency of the real-time communication is greater than a data transmission frequency of the non-real-time communication.

20. A power generation system, wherein the power generation system comprises an electric power measurement and control device, a switch device, and a plurality of power conversion devices, the switch device is configured to control connection and disconnection between the plurality of power conversion devices and a power grid, output ends of the plurality of power conversion devices are configured to connect to the power grid via a point of coupling, and the electric power measurement and control device comprises a first chip and a second chip, wherein
the first chip comprises an electric power measurement and control functional module, and the electric power measurement and control functional module is configured to: obtain electrical data of the point of coupling, and send a first control signal to the plurality of power conversion devices and the switch device based on the electrical data of the point of coupling;
the first chip is further configured to send the electrical data of the point of coupling to the second chip through a communication interface;
the second chip comprises a supervisory control and data acquisition (SCADA, Supervisory Control and Data Acquisition) and energy management system (EMS, Energy Management System) functional module, and the SCADA and EMS functional module is configured to: obtain electrical data of the plurality of power conversion devices and electrical data of the switch device, and generate a second control signal based on the electrical data of the plurality of power conversion devices, the electrical data of the switch device, and the electrical data of the point of coupling; and the second chip is further configured to send the second control signal to the first chip through the communication interface, or the second chip is further configured to send the electrical data of the plurality of power conversion devices and the electrical data of the switch device to the first chip through the communication interface; and
the electric power measurement and control functional module is further configured to send a third control signal to the plurality of power conversion devices and the switch device based on the received electrical data of the plurality of power conversion devices and the received electrical data of the switch device that are sent by the second chip through the communication interface, or the received second control signal that is sent by the second chip through the communication interface.

21. The power generation system according to claim 20, wherein the electric power measurement and control device comprises at least one control board; and the first chip and the second chip are installed on a same control board, or the first chip and the second chip are installed on different control boards.

22. The electric power measurement and control device according to claim 21, wherein a fault alarm output interface is disposed on the control board, the power generation system further comprises a redundancy device of the electric power measurement and control device, and a signal input interface is disposed on the redundancy device, wherein
the fault alarm output interface is configured to output a first alarm signal to the redundancy device when the electric power measurement and control device is faulty or powered off; and
the redundancy device is configured to: when the signal input interface receives the first alarm signal, send the first control signal to the plurality of power conversion devices and the switch device based on the obtained electrical data of the point of coupling, or send the third control signal to the plurality of power conversion devices and the switch device based on the received second control signal, or send the second control signal based on the obtained electrical data of the plurality of power conversion devices, the obtained electrical data of the switch device, and the obtained electrical data of the point of coupling.
